# EUROPÄISCHE PATENTSCHRIFT

(11) **EP 3 183 458 B1**
(45) Veröffentlichungstag und Bekanntmachung des Hinweises auf die Patenterteilung: **01.08.2018**
(21) Anmeldenummer: 15751008.2
(22) Anmeldetag: 18.08.2015
(51) Int. Cl.: F16H 57/04, F04C 2/10, F04C 11/00, F16H 61/00

(54) **FLUIDBEAUFSCHLAGUNGSVORRICHTUNG FÜR EIN GETRIEBE FÜR EIN KRAFTFAHRZEUG**
FLUID SUPPLY DEVICE FOR A TRANSMISSION FOR A MOTOR VEHICLE
DISPOSITIF D'ALIMENTATION EN FLUIDE POUR BOÎTE DE VITESSES D'UN VÉHICULE AUTOMOBILE

(30) Priorität: 18.08.2014 DE 102014111721
(43) Veröffentlichungstag der Anmeldung: 28.06.2017
(73) Patentinhaber: GETRAG B.V. & Co. KG, 74199 Untergruppenbach (DE)
(72) Erfinder: KIEHLNEKER, Alexander, 74223 Flein (DE); SEUFERT, Martin, 71711 Steinheim (DE); ANZT, Christian, 71720 Oberstenfeld (DE); RUEHLE, Guenter, 74369 Loechgau (DE); WEIDNER, Markus, 71560 Sulzbach an der Murr (DE); LOSKOT, Pawel, 74389 Cleebronn (DE)
(74) Vertreter: Rausch, Gabriele
(86) Internationale Anmeldenummer: PCT/EP2015/068909
(87) Internationale Veröffentlichungsnummer: WO 2016/026837

(56) Entgegenhaltungen:
- EP-A1- 2 463 556
- EP-A2- 1 302 704

## Beschreibung

Die vorliegende Erfindung betrifft eine Fluidbeaufschlagungsvorrichtung für ein Getriebe für ein Kraftfahrzeug, ein Getriebe für ein Kraftfahrzeug sowie ein Verfahren zur Montage einer Fluidbeaufschlagungsvorrichtung eines Getriebes.

Aus dem Stand der Technik sind zahlreiche Fluidbeaufschlagungsvorrichtungen, Getriebe und Verfahren zur Montage von Fluidbeaufschlagungsvorrichtungen bekannt.

In DE 10 2011 122 878 A1 wird beispielsweise eine Druckquelle für eine elektrofluidische Betätigungs- oder Versorgungsvorrichtung eines Kraftfahrzeugantriebsstranges beschrieben. Die Druckquelle umfasst eine Fluidpumpe, einen elektrischen Motor, der die Fluidpumpe antreibt, und ein Gehäuse, das ein erstes Gehäuseteil und ein zweites Gehäuseteil aufweist, die über eine Trennfuge miteinander verbunden sind. Dabei ist die Fluidpumpe an dem ersten Gehäuseteil in Nachbarschaft zu der Trennfuge angeordnet.

In DE 10 2012 016 591 A1 wird ein Verfahren zum Ermitteln der Temperatur eines Fluides in einer Hydraulikanordnung für ein Kraftfahrzeug beschrieben. Die Hydraulikanordnung weist eine mittels eines Antriebsmotors angetriebene Pumpenanordnung und einen mit einem Druckanschluss der Pumpenanordnung verbundenen Drucksensor zur Messung des Druckes des Fluids auf. Die Pumpenanordnung ist über eine Leckagestelle mit einem Tank verbunden. Dabei wird die Temperatur des Fluids auf der Grundlage eines für die Hydraulikanordnung spezifischen Zusammenhanges zwischen einer Zustandsvariablen des Antriebsmotors und der Temperatur des Fluids bei einem vorgegebenen Druck des Fluids ermittelt.

Die DE 10 2008 037 235 A1 beschreibt einen Hydraulikkreislauf, insbesondere zur Steuerung mindestens einer Reibkupplung eines automatischen oder automatisierten Kraftfahrzeuggetriebes und/oder des Ein- und Ausrückens der Gangstufen eines derartigen Getriebes, mit einem im Hydraulikkreislauf zumindest zeitweise strömenden Fluid. Der Hydraulikkreislauf umfasst mindestens einen Arbeitszylinder mit mindestens einem Druckregelventil, insbesondere mit jeweils einem Druckregelventil je Arbeitszylinder, zur Steuerung des Drucks im Arbeitszylinder. Der Hydraulikkreislauf umfasst weiterhin mindestens eine Leckagestelle, wobei die Leckagestelle mit einem Leckageventil abschaltbar ist. Um einen mit hoher Leistungsdichte schnell und präzise steuerbaren Hydraulikkreislauf bereitzustellen, ist die Leckagestelle künstlich und funktional wirksam zwischen dem Arbeitszylinder und dem Druckregelventil ausgebildet.

In EP 2 557 336 A2 ist ein Doppelkupplungsgetriebe mit einer hydraulischen Steuerung beschrieben. Die hydraulische Steuerung des Doppelkupplungsgetriebes umfasst wenigstens eine erste und eine zweite hydraulische Kupplung. Zur Betätigung der hydraulischen Kupplungen steht das Hydraulikmedium unter Druck. Damit eine möglichst effiziente Regelung realisierbar ist, sind in der Steuerung des Doppelkupplungsgetriebes u. a. Proportional-Regelventile verbaut.

In der gattungsgemäßen EP 1 302 704 B1 wird eine Pumpe zum Pumpen von Fluid in einem Fahrzeug offenbart. Die Pumpe weist ein Pumpengehäuse mit einem Pumpelement, einen Elektromotor, der am Pumpengehäuse befestigt ist, und eine Pumpkammer auf. Das Pumpelement steht mit dem Elektromotor in Verbindung. Die Pumpkammer weist eine Eintrittsöffnung zur Aufnahme von Fluid aus dem Speicher und eine Austrittsöffnung zum Pumpen des Fluids zum Speicher auf. Die Eintrittsöffnung und die Austrittsöffnung sind in einer im Wesentlichen coplanaren Beziehung orientiert. Die Pumpe weist weiterhin mindestens eine andere Eintritts- oder Austrittsöffnung auf, die von Kanälen abgeleitet ist, welche in einer im wesentlichen planaren Fläche benachbart zur Pumpe ausgebildet sind, wobei die Fläche nicht einstückig mit der Pumpe ausgebildet ist. Die Eintrittsöffnung und die Austrittsöffnung stehen in Fluidverbindung mit der mindestens einen anderen Eintritts- oder Austrittsöffnung. Die Fläche ist einem Getriebe, Verteilergetriebe oder einer Ölwanne eines Fahrzeuges zugeordnet.

In der EP 2 463 556 A1 wird eine elektrische Pumpeneinheit für ein Getriebe, die einen hydraulischen Druck für das Getriebe bereitstellt, offenbart. Die Pumpeneinheit weist eine Pumpe auf, die Öl ansaugt und abführt, und einen Elektromotor mit einer Welle, die mit der Pumpe verbunden ist, sowie einen Rotor, der fest mit der Welle verbunden ist, und einen Stator, der um den Rotor angeordnet ist. Die Pumpe und der Elektromotor sind mit einem Deckel integriert, der eine Öffnung einer Ausnehmung des Getriebegehäuses dicht schließt. Die Pumpe und der Elektromotor sind in der Ausnehmung aufgenommen.

Bei aus dem Stand der Technik bekannten Vorrichtungen und Verfahren treten zahlreiche Nachteile auf.

Beispielsweise kann eine Leckagestelle zusätzlichen Platz einnehmen, beispielsweise in einem Getriebegehäuse.

Weiterhin können bei aus dem Stand der Technik bekannten Vorrichtungen üblicherweise eine Vielzahl von Hydraulikleitungen in dem Getriebegehäuse vorgesehen sein. Leckagestellen, welche beispielsweise mindestens eine Blende aufweisen können, können einen nicht zu vernachlässigenden Kostenfaktor darstellen.

Weiterhin kann es bei aus dem Stand der Technik bekannten Vorrichtungen und verfahren sehr aufwendig sein bestimmte Elemente, beispielsweise einen Aktuator, zu montieren und/oder auszutauschen.

Es werden daher eine Fluidbeaufschlagungsvorrichtung für ein Getriebe für ein Kraftfahrzeug gemäß Anspruch 1, ein Getriebe für ein Kraftfahrzeug gemäß Anspruch 11 sowie ein Verfahren zur Montage einer Fluidbeaufschlagungsvorrichtung eines Getriebes gemäß Anspruch 15 vorgeschlagen, welche die Nachteile bekannter Vorrichtungen und Verfahren zumindest weitgehend vermeiden.

Die Fluidbeaufschlagungsvorrichtung für ein Getriebe für ein Kraftfahrzeug weist ein Fluidbeaufschlagungsvorrichtungsgehäuse auf. Die Fluidbeaufschlagungsvorrichtung kann beispielsweise mindestens einen Aktuator, bevorzugt mindestens einen Pumpenaktuator, umfassen. Die Fluidbeaufschlagungsvorrichtung kann beispielsweise einen Hydraulikregelkreis umfassen, beispielsweise zur Ansteuerung mindestens einer Kupplung, insbesondere mindestens einer Trockenkupplung und/oder mindestens einer Nasskupplung. Die Fluidbeaufschlagungsvorrichtung kann beispielsweise eingerichtet sein um eine Kupplung geregelt mit einem Fluid, beispielsweise aus einem Fluidsumpf zu beaufschlagen.

Unter dem Ausdruck "geregelt" kann im Rahmen der vorliegenden Erfindung beispielsweise verstanden werden, dass ein Fluiddruck an der Kupplung definiert eingestellt und/oder verändert werden kann.

Unter dem Ausdruck "beaufschlagen" kann im Rahmen der vorliegenden Erfindung beispielsweise eine Versorgung mit Fluid, insbesondere zum Kühlen und/oder zum Schmieren, und/oder zu einer hydraulischen Steuerung, insbesondere zum Aktuieren, verstanden werden.

Bei dem Fluid kann es sich um eine beliebige Flüssigkeit und/oder um ein beliebiges Gas handeln. Bevorzugt kann es sich bei dem Fluid um eine Flüssigkeit handeln. Beispielsweise kann das Fluid mindestens ein Schmiermittel und/oder mindestens ein Kühlmittel umfassen. Besonders bevorzugt kann es sich bei dem Fluid um Öl handeln, beispielsweise um ein Schmieröl und/oder um ein Kühlöl.

Die Fluidbeaufschlagungsvorrichtung kann beispielsweise mehrere Fluidbeaufschlagungsvorrichtungsgehäuse, beispielsweise zwei Fluidbeaufschlagungsvorrichtungsgehäuse, aufweisen. Das Fluidbeaufschlagungsvorrichtungsgehäuse kann beispielsweise eine Vorrichtung sein, welche die Fluidbeaufschlagungsvorrichtung räumlich gegenüber einer Umgebung abgrenzt. Das Fluidbeaufschlagungsvorrichtungsgehäuse kann prinzipiell mindestens einen Festkörper, beispielsweise ein Metall, vorzugsweise Aluminium, umfassen. Das Fluidbeaufschlagungsvorrichtungsgehäuse kann beispielsweise aus dem Metall, bevorzugt aus Aluminium, bestehen.

Die Fluidbeaufschlagungsvorrichtung kann eingerichtet sein, um Fluid aus dem Fluidsumpf zu der Kupplung zu führen und/oder zu pumpen und/oder mit einem Druck, insbesondere einem Fluiddruck, zu beaufschlagen.

In dem Fluidbeaufschlagungsvorrichtungsgehäuse sind mindestens eine Pumpe und mindestens ein Elektromotor integriert.

Die Fluidbeaufschlagungsvorrichtung kann beispielsweise mindestens ein Ventil aufweisen.

In dem Fluidbeaufschlagungsvorrichtungsgehäuse können beispielsweise mindestens ein Ventil, insbesondere zwei Ventile, integriert sein.

Beispielsweise können in dem Fluidbeaufschlagungsvorrichtungsgehäuse mindestens zwei Pumpen integriert sein.

Beispielsweise kann die Fluidbeaufschlagungsvorrichtung zwei oder drei Pumpen umfassen. Insbesondere können in dem Fluidbeaufschlagungsvorrichtungsgehäuse zwei oder drei Pumpen integriert sein.

Beispielsweise kann die Fluidbeaufschlagungsvorrichtung zwei oder drei Elektromotoren umfassen. Insbesondere können in dem Fluidbeaufschlagungsvorrichtungsgehäuse zwei oder drei Elektromotoren integriert sein.

Eine Pumpe kann beispielsweise zu einer Kühlung und/oder Schmierung verwendet werden und/oder zwei Pumpen können für eine Aktuierung jeweils einer Kupplung verwendet werden.

Die Fluidbeaufschlagungsvorrichtung kann insbesondere ausgestaltet sein, um zwei Kupplungen zu aktuieren und/oder um zwei Kupplungen zu kühlen.
Unter dem Ausdruck "integriert" kann im Rahmen der vorliegenden Erfindung verstanden werden, dass das Element, beispielsweise die Pumpe und/oder der Elektromotor, im Wesentlichen, vorzugsweise vollständig, von dem Fluidbeaufschlagungsvorrichtungsgehäuse räumlich umfasst wird.

Die Pumpe kann beispielsweise eine Vorrichtung sein, welche eingerichtet ist, um elektrische Energie in mechanische Energie, bevorzugt in hydraulische Energie, umzuwandeln. Die Pumpe kann eingerichtet sein um das Fluid, insbesondere Öl, mit einem Druck und/oder einem Volumenstrom zu beaufschlagen.

Die Pumpe kann mindestens einen Außenrotor und/oder mindestens einen Innenrotor aufweisen. Die Pumpe kann beispielsweise eine Gerotorpumpe sein.

Die Pumpe kann beispielsweise eine unidirektionale Pumpe sein. Alternativ hierzu kann die Pumpe eine bidirektionale Pumpe sein. Die bidirektionale Pumpe kann in mindestens einer Pumprichtung und in mindestens einer Saugrichtung betreibbar sein. Die Pumprichtung kann beispielsweise von der Pumpe zu einem Verbraucher, beispielsweise zu der Kupplung, zeigen. Die Saugrichtung kann bevorzugt entgegengesetzt zu der Pumprichtung sein. Der Elektromotor kann bevorzugt eingerichtet sein um die Pumpe zu betreiben.

Der Elektromotor kann beispielsweise mindestens einen Stator und/oder mindestens einen Rotor und/oder mindestens eine E-Motorwelle aufweisen.

Die Fluidbeaufschlagungsvorrichtung ist modulartig ausgestaltet. Die Fluidbeaufschlagungsvorrichtung kann beispielsweise reversibel in und/oder an dem Getriebe angeordnet sein. Unter dem Ausdruck "reversibel" kann beispielsweise verstanden werden, dass die Fluidbeaufschlagungsvorrichtung beliebig häufig zumindest teilweise, vorzugsweise vollständig, von dem Getriebe oder von dem restlichen Teil eines Getriebes getrennt werden kann. Die Fluidbeaufschlagungsvorrichtung kann beispielsweise ein Modul sein. Die Fluidbeaufschlagungsvorrichtung kann beispielsweise eingerichtet sein um ohne ein weiteres Element zu lösen, beispielsweise von einem Getriebe, eingebaut und/oder ausgebaut zu werden. Die Fluidbeaufschlagungsvorrichtung kann beispielsweise innerhalb weniger Minuten, bevorzugt innerhalb weniger Sekunden, einbaubar und/oder anbaubar sein, beispielsweise in und/oder an das Getriebe.

Die Fluidbeaufschlagungsvorrichtung kann bevorzugt kompakt ausgestaltet sein. Die Fluidbeaufschlagungsvorrichtung kann bevorzugt als ein stabiler und/oder fester Gegenstand ausgestaltet sein. Die Fluidbeaufschlagungsvorrichtung kann insbesondere einstückig ausgestaltet sein.

Die Fluidbeaufschlagungsvorrichtung kann beispielsweise kompakt ausgestaltet sein. Die Fluidbeaufschlagungsvorrichtung kann beispielsweise ein Volumen von zwischen 10 cm³ und 1000 cm³, bevorzugt von zwischen 100 cm³ und 500 cm³, besonders bevorzugt zwischen 300 cm³ und 400 cm³ aufweisen.

Beispielsweise kann die Fluidbeaufschlagungsvorrichtung im Wesentlichen zylinderförmig ausgestaltet sein. Beispielsweise kann die Fluidbeaufschlagungsvorrichtung einen Durchmesser von 10 mm bis 100 mm, bevorzugt von 50 mm bis 70 mm, besonders bevorzugt von 66 mm aufweisen. Beispielsweise kann die Fluidbeaufschlagungsvorrichtung eine Höhe von 10 mm bis 500 mm, bevorzugt von 50 mm bis 200 mm, besonders bevorzugt von 95 mm aufweisen.

Die Fluidbeaufschlagungsvorrichtung kann beispielsweise ein Steckmodul sein. Die Fluidbeaufschlagungsvorrichtung kann beispielsweise mindestens ein Befestigungselement aufweisen, beispielsweise mindestens eine Schraube, bevorzugt um in dem Getriebe oder an dem Getriebe befestigt zu werden.

Die Fluidbeaufschlagungsvorrichtung kann beispielsweise eingerichtet sein, um Fluid von einem Reservoir, beispielsweise einem Fluidsumpf, zu einem Verbraucher, beispielsweise einer Kupplung, zu führen. Die Fluidbeaufschlagungsvorrichtung kann mindestens einen geschlossenen Fluidkreislauf aufweisen. Alternativ oder zusätzlich kann die Fluidbeaufschlagungsvorrichtung mindestens einen Fluiddurchlauf aufweisen.

In dem Fluidbeaufschlagungsvorrichtungsgehäuse können mindestens ein Sensor, insbesondere mindestens ein Drucksensor und/oder mindestens ein Temperatursensor, integriert sein. Bei dem Sensor kann es sich prinzipiell um eine beliebige Vorrichtung handeln, welche eingerichtet ist um mindestens eine physikalische Größe, beispielsweise mindestens eine physikalische Größe des Fluids, zu erfassen. Die physikalische Größe kann beispielsweise ausgewählt sein aus einem Druck des Fluids und/oder einer Druckdifferenz des Fluids; einer Temperatur, beispielsweise einer Temperatur des Fluids; einer Zähigkeit, beispielsweise einer Zähigkeit des Fluids; einem Volumenstrom; einer Fließgeschwindigkeit; einer Rotationsgeschwindigkeit der Pumpe, einer Drehfrequenz der Pumpe; und einer Position einer Welle, beispielsweise eine Position einer Welle der Pumpe. Der Sensor kann beispielweise ein Inkrementalsensor sein.

Beispielsweise kann der Sensor, insbesondere der Inkrementalsensor, eingerichtet sein um mindestens eine Eigenschaft des Elektromotors und/oder der Pumpe zu erfassen. Insbesondere kann der Sensor eingerichtet sein um mindestens eine Position des Elektromotors und/oder der Pumpe, beispielsweise eine Rotorlage, und/oder mindestens eine Drehzahl des Elektromotors und/oder der Pumpe zu erfassen.

Beispielsweise kann die Fluidbeaufschlagungsvorrichtung eingerichtet sein um aus einem von dem Sensor erfassten zeitlichen Verlauf der Position auf die Drehzahl des Elektromotors und/oder auf eine Drehzahl der Pumpe zu schließen.

Der Sensor, insbesondere der Inkrementalsensor, kann beispielsweise mindestens einen Hallsensor aufweisen, bevorzugt um die Position und/oder den zeitlichen Verlauf der Position des Rotors und/oder um die Drehzahl des Elektromotors und/oder der Pumpe zu erfassen.

Alternativ oder zusätzlich kann die Drehzahl des Elektromotors und/oder die Drehzahl der Pumpe induktiv erfasst werden.

Der Sensor, insbesondere der Temperatursensor, kann beispielsweise eingerichtet sein um eine Steuerung der Fluidbeaufschlagungsvorrichtung, insbesondere des Pumpenaktuators, zu verbessern. Der Temperatursensor kann beispielsweise eingerichtet sein um eine Temperatur des Fluids, beispielsweise eines einströmenden Fluidstroms, zu erfassen. Beispielsweise kann bei einer bekannten Temperatur des Fluids, beispielsweise des einströmenden Fluidstroms, ein Druck des Fluids besser kontrolliert und/oder geregelt werden. Bevorzugt kann der Temperatursensor an einem Sauganschluss angeordnet sein und/oder eingerichtet sein, um die Temperatur des Fluids an dem Sauganschluss zu erfassen.

In dem Fluidbeaufschlagungsvorrichtungsgehäuse kann mindestens ein Filter integriert sein. Der Filter kann beispielsweise ein Druckfilter und/oder ein Saugfilter sein. Beispielsweise kann die Fluidbeaufschlagungsvorrichtung mindestens einen Druckfilter und/oder mindestens einen Saugfilter umfassen, bevorzugt innerhalb des Fluidbeaufschlagungsvorrichtungsgehäuses. Der Filter kann beispielsweise eingerichtet sein, um eine Verunreinigung des Fluids zu verhindern und/oder zu mildern. Der Saugfilter kann beispielsweise vor der Pumpe angeordnet sein. Der Saugfilter kann insbesondere eingerichtet sein um angesaugtes Fluid zu filtern. Der Druckfilter kann bevorzugt hinter der Pumpe angeordnet sein. Der Druckfilter kann beispielsweise eingerichtet sein um eine Blende vor Schmutz zu schützen. Der Druckfilter kann bevorzugt vor einer Blende angeordnet sein.

Der Filter kann beispielsweise mindestens ein Sieb aufweisen. Insbesondere kann der Filter ein Sieb sein.

Alternativ hierzu kann der Filter ganz oder zumindest teilweise außerhalb des Fluidbeaufschlagungsvorrichtungsgehäuses angeordnet sein.

In dem Fluidbeaufschlagungsvorrichtungsgehäuse kann mindestens eine Elektroeinheit integriert sein. Die Elektroeinheit kann mindestens eine Elektronikeinheit und/oder elektrische Hardware und/oder mindestens eine Ansteuerung, beispielsweise eine Steuereinheit, und/oder mindestens einen Kabelbaum und/oder mindestens eine Platine und/oder mindestens eine Schnittstelle und/oder mindestens einen Stecker umfassen.

Der Stecker kann bevorzugt seitlich an dem Fluidbeaufschlagungsvorrichtungsgehäuse angeordnet sein. Besonders bevorzugt kann der Stecker an einem Mantel eines Gehäusetopfes und/oder an einem Gehäusedeckel angeordnet sein.

Der Gehäusedeckel kann vorzugsweise eine elektrische Leitung zwischen dem Ventil und/oder einem Sensor, insbesondere dem kombinierten Temperatur-Druck-Sensor, und dem Stecker aufweisen. Der Stecker kann bevorzugt wie auch das Ventil und/oder der kombinierte Temperatur-Druck-Sensor seitlich zu der Rotationsachse der Pumpe angeordnet sein.

Die Fluidbeaufschlagungsvorrichtung kann mindestens eine Kabeldurchführung aufweisen. Die Kabeldurchführung kann beispielsweise in das Fluidbeaufschlagungsvorrichtungsgehäuse integriert sein. Die Kabeldurchführung kann beispielsweise mindestens einen Sensor und/oder den Elektromotor mit der Elektroeinheit verbinden.

Das Fluidbeaufschlagungsvorrichtungsgehäuse kann mindestens einen Gehäusetopf und mindestens einen Gehäusedeckel aufweisen. Das Fluidbeaufschlagungsvorrichtungsgehäuse kann beispielsweise ein Komponentengehäuse sein. Der Gehäusedeckel kann mit dem Gehäusetopf verbunden sein, vorzugsweise dauerhaft verbunden sein. Beispielsweise kann der Gehäusedeckel mit dem Gehäusetopf verschweist und/oder verstemmt sein. Beispielsweise kann der Gehäusedeckel mit dem Gehäusetopf mittels mindestens einer Verschlussvorrichtung verbunden sein. Alternativ hierzu kann der Gehäusedeckel reversibel mit dem Gehäusetopf verbunden sein, insbesondere mittels mindestens einer Verschlussvorrichtung. Der Gehäusetopf und/oder der Gehäusedeckel können beispielsweise im Wesentlichen zylinderförmig und/oder topfförmig ausgestaltet sein. Der Gehäusetopf und/oder der Gehäusedeckel können mindestens einen Boden aufweisen. Zusätzlich kann das Fluidbeaufschlagungsvorrichtungsgehäuse mindestens ein Gehäusemittelstück aufweisen. Das Gehäusemittelstück kann beispielsweise rohrförmig ausgestaltet sein. Der Gehäusetopf und/oder der Gehäusedeckel und/oder das Gehäusemittelstück können mindestens einen Flansch und/oder mindestens ein Gewinde und/oder mindestens eine Schraubverbindung und/oder mindestens eine Klemmverbindung aufweisen, insbesondere derart, dass das Fluidbeaufschlagungsvorrichtungsgehäuse geschlossen werden kann, vorzugsweise reversibel geschlossen und/oder geöffnet werden kann.

Das Fluidbeaufschlagungsvorrichtungsgehäuse kann beispielsweise mindestens zwei miteinander verbundene Gehäuseteile aufweisen.

Bei den Gehäuseteilen kann es sich beispielsweise um separate Gehäuse handeln, welche zumindest an mindestens einer Stelle mit mindestens einem anderen Gehäuseteil des Fluidbeaufschlagungsvorrichtungsgehäuses verbunden sein können.

Die Gehäuseteile können beispielsweise Öffnungen aufweisen, insbesondere an Verbindungen zu anderen Gehäuseteilen.

Das Gehäuseteil kann ganz oder teilweise in das Fluidbeaufschlagungsvorrichtungsgehäuse integriert sein.
Mindestens eines der Gehäuseteile kann zumindest teilweise eine Außenwand des Fluidbeaufschlagungsvorrichtungsgehäuses bilden.

Die Gehäuseteile können modulartig miteinander verbunden sein und so das Fluidbeaufschlagungsvorrichtungsgehäuse bilden. Die Gehäuseteile können beispielsweise zumindest teilweise miteinander verschachtelt sein. Mindestens eines der Gehäuseteile kann zumindest teilweise in mindestens einem anderen Gehäuseteil integriert sein.

Das Fluidbeaufschlagungsvorrichtungsgehäuse kann beispielsweise mindestens zwei Gehäusetöpfe als Gehäuseteile aufweisen. Die Gehäusetöpfe können beispielsweise miteinander verschachtelt sein.

Beispielsweise kann in das Fluidbeaufschlagungsvorrichtungsgehäuse mindestens eine Leistungselektronik integriert sein. Beispielsweise kann die Leistungselektronik in einem Gehäuseteil des Fluidbeaufschlagungsvorrichtungsgehäuses integriert sein. Bevorzugt kann die Leistungselektronik in dem Gehäusedeckel integriert sein.

Alternativ oder zusätzlich kann in dem Gehäusedeckel mindestens eine elektrische Leitung integriert sein.

Alternativ hierzu kann die Leistungselektronik auch in einem separaten Gehäuse angeordnet sein.

Beispielsweise können der Sensor, insbesondere der Drucksensor und/oder der Temperatursensor, bevorzugt der kombinierte Temperatur-Druck-Sensor, mindestens an einer Seite an eine elektrische Leitung angeschlossen sein.

Die elektrische Leitung kann beispielsweise an einer axialen Seite, also im Wesentlichen parallel zu der Rotationsachse der Pumpe, des Sensors, insbesondere des Drucksensors und/oder des Temperatursensors, bevorzugt des kombinierten Temperatur-Druck-Sensors, angeordnet sein.

Alternativ hierzu kann die elektrische Leitung beispielsweise an einer radialen Seite, also im Wesentlichen senkrecht zu der Rotationsachse der Pumpe, des Sensors, insbesondere des Drucksensors und/oder des Temperatursensors, bevorzugt des kombinierten Temperatur-Druck-Sensors, angeordnet sein.

Das Fluidbeaufschlagungsvorrichtungsgehäuse kann bevorzugt mindestens ein Gehäuseteil umfassend den Elektromotor, beispielsweise ein Elektromotorgehäuseteil, und mindestens ein Gehäuseteil umfassend die Pumpe, beispielsweise ein Pumpengehäuseteil, aufweisen. Das Gehäuseteil umfassend den Elektromotor und das Gehäuseteil umfassend die Pumpe können bevorzugt miteinander verbunden sein, insbesondere über mindestens eine Öffnung des Gehäuseteils umfassend die Pumpe und mindestens eine Öffnung des Gehäuseteils umfassend den Elektromotor.

In dem Elektromotorengehäuseteil können vorzugsweise der Elektromotor und/oder mindestens ein Sensor, bevorzugt mindestens ein Inkrementalsensor, integriert sein.

In dem Pumpengehäuseteil können die Pumpe und/oder mindestens eine Fluidleitung und/oder mindestens eine elektrische Leitung und/oder mindestens ein Sensor, beispielsweise mindestens ein Temperatursensor und/oder mindestens eine Drucksensor und/oder mindestens ein kombinierter Temperatur-Druck-Sensor und/oder mindestens ein Inkrementalsensor, und/oder mindestens eine Blende und/oder mindestens ein Ventil und/oder mindestens eine interne Leckage und/oder mindestens eine externe Leckage, integriert sein.

Das Pumpengehäuseteil kann bevorzugt die Form eines Zylinders aufweisen. Beispielsweise kann das Pumpengehäuseteil mindestens einen seitlichen Arm aufweisen. In dem Arm können insbesondere mindestens ein Temperatursensor und/oder mindestens ein Drucksensor und/oder mindestens eine Blende und/oder mindestens eine Fluidleitung und/oder mindestens eine elektrische Leitung und/oder mindestens ein Ventil, integriert sein.

Alternativ oder zusätzlich kann das Fluidbeaufschlagungsvorrichtungsgehäuse mindestens ein Gehäuseteil umfassend mindestens eine Leitung, insbesondere mindestens ein Leitungsgehäuseteil, und/oder mindestens ein Gehäuseteil umfassend mindestens ein Ventil, insbesondere mindestens ein Ventilgehäuseteil, aufweisen. Bei der Leitung kann es sich beispielsweise um eine elektrische Leitung, insbesondere eine Strom- und/oder Spannungsversorgungsleitung und/oder um eine Signalleitung, und/oder um eine Fluidleitung handeln.

Das Leitungsgehäuseteil kann in axialer Richtung über das Pumpengehäuseteil hinausragen.

Beispielsweise können das Elektromotorgehäuseteil und/oder das Pumpengehäuseteil und/oder das Leitungsgehäuseteil und/oder das Ventilgehäuseteil als ein Gehäuseteil ausgestaltet sein.

Das Elektromotorgehäuseteil und/oder das Pumpengehäuseteil und/oder das Leitungsgehäuseteil und/oder das Ventilgehäuseteil können ganz oder teilweise in das Fluidbeaufschlagungsvorrichtungsgehäuse integriert sein.

Beispielsweise können das Elektromotorgehäuseteil und/oder das Pumpengehäuseteil und/oder das Leitungsgehäuseteil und/oder das Ventilgehäuseteil zumindest teilweise eine Außenwand des Fluidbeaufschlagungsvorrichtungsgehäuses bilden.

Beispielsweise können der Sensor, insbesondere der Drucksensor und/oder der Temperatursensor, bevorzugt der kombinierte Temperatur-Druck-Sensor, mindestens an einer Seite an eine Fluidleitung angeschlossen sein.

Die Fluidleitung kann beispielsweise an einer axialen Seite, also im Wesentlichen parallel zu der Rotationsachse der Pumpe, des Sensors, insbesondere des Drucksensors und/oder des Temperatursensors, bevorzugt des kombinierten Temperatur-Druck-Sensors, angeordnet sein.

Alternativ hierzu kann die Fluidleitung beispielsweise an einer radialen Seite, also im Wesentlichen senkrecht zu der Rotationsachse der Pumpe, des Sensors, insbesondere des Drucksensors und/oder des Temperatursensors, bevorzugt des kombinierten Temperatur-Druck-Sensors, angeordnet sein.

Zumindest ein Teil der Gehäuseteile können beispielsweise miteinander verschraubt sein, beispielsweise mittels mindestens einer Schraube. Alternativ oder zusätzlich können zumindest ein Teil der Gehäuseteile mittels Steckverbindungen miteinander verbunden sein, beispielsweise mittels mindestens eines Befestigungshakens fixiert.

Beispielsweise können zumindest das Gehäuseteil umfassend die Pumpe und das Gehäuseteil umfassend den Elektromotor miteinander verschraubt sein, insbesondere mittels mindestens einer Schraube. Die restlichen Gehäuseteile können bevorzugt mittels Steckverbindungen miteinander verbunden sein, beispielsweise mittels mindestens eines Befestigungshakens miteinander fixiert sein.

Die Gehäuseteile können zumindest teilweise beispielsweise eine im Wesentlichen rotationssymmetrische Form aufweisen, bevorzugt im Wesentlichen rotationssymmetrisch zu einer Rotationsachse der Pumpe.

Besonders bevorzugt können das Elektromotorgehäuseteil und/oder das Pumpengehäuseteil eine um die Rotationsachse der Pumpe im Wesentlichen rotationssymmetrische Form aufweisen.

Prinzipiell können die Gehäuseteile aber zumindest teilweise eine Form aufweisen, die nicht rotationssymmetrisch zu der Rotationsachse der Pumpe ist.

Insbesondere kann zumindest ein Gehäuseteil des Fluidbeaufschlagungsvorrichtungsgehäuses, beispielsweise das Leitungsgehäuseteil und/oder das Ventilgehäuseteil und/oder zumindest teilweise das Pumpengehäuseteil, seitlich versetzt zu der Rotationsachse der Pumpe angeordnet sein. Beispielsweise kann zumindest ein Gehäuseteil in der Form eines seitlichen Arms angeordnet sein, beispielsweise das Leitungsgehäuseteil und/oder das Ventilgehäuseteil, Zumindest ein Gehäuseteil kann einen seitlichen Arm aufweisen, beispielsweise das Pumpengehäuseteil.

Das Fluidbeaufschlagungsvorrichtungsgehäuse kann beispielsweise die Topologie eines Homöomorphismus zu einem Torus aufweisen. Das Fluidbeaufschlagungsvorrichtungsgehäuse kann beispielsweise die Form einer geschlossenen Tasse aufweisen, wobei das Fluidbeaufschlagungsvorrichtungsgehäuse vorzugsweise mindestens zwei Gehäuseteile aufweist.

Beispielsweise können das Leitungsgehäuseteil und/oder das Ventilgehäuseteil und/oder das Pumpengehäuseteil eine Form aufweisen, die nicht rotationssymmetrisch zu der Rotationsachse der Pumpe ist. Das Leitungsgehäuseteil und/oder das Ventilgehäuseteil können beispielsweise als seitlich an dem Pumpengehäuseteil und/oder an dem Elektromotorgehäuseteil angeordnetes Gehäuseteil ausgestaltet sein.

Bei dem Gehäuseteil kann es sich prinzipiell um ein beliebiges Gehäuse handeln. Beispielsweise kann das Gehäuseteil ein Sensorgehäuse, beispielsweise ein Temperatursensorgehäuse und/oder ein Drucksensorgehäuse und/oder ein Gehäuse eines kombinierten Temperatur-Druck-Sensors, sein und/oder ein Filtergehäuse und/oder ein Ventilgehäuse und/oder ein Blendengehäuse und/oder ein Ansteuerungsgehäuse.

Die Gehäuseteile können insbesondere modulartig angeordnet sein. Das Fluidbeaufschlagungsvorrichtungsgehäuse kann insbesondere eine modulartige Zusammensetzung mindestens zweier Gehäuseteile aufweisen.

Das Pumpengehäuseteil und das Elektromotorengehäuseteil können vorzugsweise im Wesentlichen rotationssymmetrisch zu der Rotationsachse der Pumpe ausgestaltet sein. Allerdings kann beispielsweise der Gehäusedeckel an zumindest einer radialen Seite nicht rotationssymmetrisch sein, sondern mindestens eine Kabeldurchführung seitlich aufweisen. Weiterhin kann beispielsweise mindestens ein Stecker und/oder mindestens ein Sensor, beispielsweise mindestens ein Temperatursensor und/oder mindestens ein Drucksensor, bevorzugt ein kombinierter Temperatur-Druck-Sensor seitlich an dem Fluidbeaufschlagungsvorrichtungsgehäuse, beispielsweise an dem Gehäusedeckel, angeordnet sein. Der Stecker und/oder der Temperatursensor und/oder der Drucksensor, bevorzugt der kombinierte Temperatur-Druck-Sensor, können ganz oder teilweise in dem Gehäusedeckel integriert sein, Bevorzugt kann der Stecker außen an dem Gehäusedeckel angeordnet sein und der Temperatursensor und/oder der Drucksensor, bevorzugt der kombinierte Temperatur-Druck-Sensor, kann teilweise in dem Gehäusedeckel integriert sein und teilweise außerhalb des Gehäusedeckels angeordnet sein.

Der Inkrementalsensor und der kombinierte Temperatur-Druck-Sensor können insbesondere über mindestens eine Kabeldurchführung mit dem Stecker verbunden sein.

Das Pumpengehäuseteil kann bevorzugt eine seitliche Öffnung aufweisen. In der seitlichen Öffnung kann bevorzugt der Sensor, insbesondere der kombinierte Temperatur-Druck-Sensor, angeordnet sein. Die seitliche Öffnung des Pumpengehäuseteils kann mittels des Leitungsgehäuseteils mit dem Gehäusedeckel verbunden sein.

Der kombinierte Temperatur-Druck-Sensor kann teilweise in dem Pumpengehäuseteil und teilweise in dem Leitungsgehäuseteil angeordnet sein.

Das Leitungsgehäuseteil kann vorzugsweise eine elektrische Leitung zwischen dem Sensor, insbesondere dem kombinierten Temperatur-Druck-Sensor und dem Stecker aufweisen. Der Stecker kann bevorzugt wie auch der kombinierte Temperatur-Druck-Sensor seitlich zu der Rotationsachse der Pumpe angeordnet sein.

Zwischen dem Elektromotorgehäuseteil und/oder dem Leitungsgehäuseteil und/oder dem Pumpengehäuseteil und/oder dem Gehäusedeckel kann insbesondere eine Öffnung vorhanden sein.

Das Pumpengehäuseteil kann bevorzugt die Form eines Zylinders mit einer Ausstülpung an einer Seite aufweisen. Das Pumpengehäuseteil kann bevorzugt eine axiale Öffnung an der Ausstülpung aufweisen. In der axialen Öffnung können bevorzugt das Ventil und/oder der Sensor, insbesondere der kombinierte Temperatur-Druck-Sensor, angeordnet sein. Das Pumpengehäuseteil kann über das Ventilgehäuseteil mit dem Gehäusedeckel verbunden sein.

Der kombinierte Temperatur-Druck-Sensor und/oder das Ventil können teilweise in dem Pumpengehäuseteil und teilweise in dem Ventilgehäuseteil angeordnet sein.

Zwischen dem Elektromotorgehäuseteil und/oder dem Ventilgehäuseteil und/oder dem Pumpengehäuseteil und/oder dem Gehäusedeckel kann insbesondere eine Öffnung vorhanden sein.
Das Ventilgehäuseteil kann zumindest teilweise in den Gehäusedeckel und/oder in das Pumpengehäuseteil integriert sein.

Die Fluidbeaufschlagungsvorrichtung kann mindestens eine Fluidschnittstelle umfassen. Die Fluidschnittstelle kann beispielsweise eine Möglichkeit für mindestens eine fluidische Verbindung zwischen der Fluidbeaufschlagungsvorrichtung und einem weiteren Element, beispielsweise dem Verbraucher und/oder dem Getriebe und/oder einem Teil des Getriebes und/oder der Kupplung, bieten.

Die Fluidbeaufschlagungsvorrichtung kann beispielsweise zwei Fluidschnittstellen umfassen. Die Fluidbeaufschlagungsvorrichtung kann beispielsweise zwei Fluidschnittstellen umfassen, wenn sie zwei Pumpen umfasst.
Die Fluidschnittstelle kann beispielsweise an dem Pumpengehäuseteil angeordnet sein. Die Fluidschnittstelle kann insbesondere axial angeordnet sein.

Der Sensor, insbesondere der kombinierte Temperatur-Druck-Sensor, kann beispielsweise teilweise in dem Gehäusedeckel und teilweise in dem Pumpengehäuseteil integriert sein. Alternativ hierzu kann der Sensor, insbesondere der kombinierte Temperatur-Druck-Sensor teilweise in dem Leitungsgehäuseteil und teilweise in dem Pumpengehäuseteil integriert sein.

Der Sensor, insbesondere der Drucksensor und/oder der Temperatursensor und/oder der kombinierte Temperatur-Druck-Sensor und/oder der Inkrementalsensor, können beispielsweise zumindest teilweise in dem Ventilgehäuse integriert sein.

Die Fluidschnittstelle weist mindestens einen Sauganschluss und mindestens einen Druckanschluss auf. Der Sauganschluss kann beispielsweise eingerichtet sein, um von der Pumpe angesaugtes Fluid in die Fluidbeaufschlagungsvorrichtung zu transportieren. Der Druckanschluss kann beispielsweise eingerichtet sein um mindestens ein Element eines Getriebes, beispielsweise eine Kupplung, mit dem Fluid zu beaufschlagen.

Die Fluidschnittstelle umfasst mindestens einen O-Ring, bevorzugt mehrere O-Ringe, beispielsweise zwei O-Ringe oder vier O-Ringe, insbesondere zur Abdichtung der Fluidschnittstelle. Der O-Ring kann beispielsweise ein Dichtungselement sein, insbesondere ein ringförmiges Dichtungselement. Der O-Ring kann beispielsweise mindestens einen Kunststoff, beispielsweise Gummi, umfassen.

Die Fluidschnittstelle kann mindestens einen, bevorzugt zwei, Stutzen aufweisen. Der Stutzen kann beispielsweise mindestens eine aus dem Fluidbeaufschlagungsvorrichtungsgehäuse herausstehende Fluidleitung und/oder mindestens einen Fluidanschluss aufweisen. Der Stutzen kann beispielsweise an dem Fluidbeaufschlagungsvorrichtungsgehäuse angeschweißt sein oder der Stutzen kann ein Teil des Fluidbeaufschlagungsvorrichtungsgehäuses sein. An dem Stutzen können beispielsweise zwei O-Ringe mit nach unten kleineren Radien, insbesondere verschachtelt, angeordnet sein.

Beispielsweise kann sich der Stutzen zum von dem Fluidbeaufschlagungsvorrichtungsgehäuse entfernten Ende hin verjüngen. Der Stutzen kann beispielsweise zwei Rohre mit unterschiedlichen Durchmessern aufweisen. Der Stutzen kann an dem von dem Fluidbeaufschlagungsvorrichtungsgehäuse entfernten Ende einen kleineren Durchmesser aufweisen als an dem Austritt des Stutzens aus dem Fluidbeaufschlagungsvorrichtungsgehäuse.

Die Fluidschnittstelle kann mindestens ein, bevorzugt zwei, Verbindungsröhrchen umfassen. Das Verbindungsröhrchen kann beispielsweise eingerichtet sein um die Fluidbeaufschlagungsvorrichtung mechanisch und/oder fluidisch mit mindestens einem weiteren Element, beispielsweise einem Element des Getriebes, besonders bevorzugt der Kupplung und/oder des Fluidsumpfs, zu verbinden.

Alternativ oder zusätzlich kann die Fluidschnittstelle mindestens eine Leitung in dem Getriebegehäuse umfassen.

In dem Fluidbeaufschlagungsvorrichtungsgehäuse kann mindestens eine Fluidleitung integriert sein.

Der Sauganschluss und/oder der Druckanschluss und/oder der Stutzen und/oder das Verbindungsröhrchen und/oder die Leitung können im Wesentlichen parallel zu einer Rotationsachse der Pumpe oder im Wesentlichen senkrecht zu der Rotationsachse der Pumpe ausgerichtet sein. Unter dem Ausdruck "im Wesentlichen parallel" kann beispielsweise ein Winkel zwischen einer Achse des Sauganschlusses und/oder des Druckanschlusses, beispielsweise eine Rotationssymmetrieachse des Sauganschlusses und/oder eine Rotationssymmetrieachse des Druckanschlusses, und der Rotationsachse der Pumpe von 0° bis 45°, bevorzugt von 0° bis 10°, besonders bevorzugt von 0° verstanden werden. Unter dem Ausdruck "im Wesentlichen senkrecht" kann beispielsweise ein Winkel zwischen einer Achse des Sauganschlusses und/oder des Druckanschlusses, beispielsweise eine Rotationssymmetrieachse des Sauganschlusses und/oder eine Rotationssymmetrieachse des Druckanschlusses, und der Rotationsachse der Pumpe von 45° bis 135°, bevorzugt von 80° bis 100°, besonders bevorzugt von 90° verstanden werden. Der Sauganschluss und/oder der Druckanschluss können beispielsweise axial, insbesondere im Wesentlichen parallel zu der Rotationsachse der Pumpe, angeordnet sein, beispielsweise an dem Boden des Gehäusetopfes und/oder an dem Boden des Gehäusedeckels. Alternativ hierzu können der Sauganschluss und/oder der Druckanschluss radial, insbesondere im Wesentlichen senkrecht zu der Rotationsachse der Pumpe, angeordnet sein, beispielsweise an einem Mantel des Gehäusetopfes und/oder an einem Mantel des Gehäusedeckels und/oder an dem Mittelstück.

Eine Rotationssymmetrieachse des O-Rings kann beispielsweise im Wesentlichen senkrecht zu der Rotationsachse der Pumpe angeordnet sein. Alternativ hierzu kann eine Rotationssymmetrieachse des O-Rings im Wesentlichen parallel zu der Rotationsachse der Pumpe angeordnet sein.

Beispielsweise können für den Sauganschluss und/oder für den Druckanschluss jeweils ein oder zwei O-Ringe vorgesehen sein. Beispielsweise können die Rotationssymmetrieachsen der O-Ringe im Wesentlichen senkrecht oder parallel zu der Rotationsachse der Pumpe angeordnet sein.

Die Außendurchmesser der O-Ringe der Fluidbeaufschlagungsvorrichtung können beispielsweise gleich sein. Bevorzugt können die Außendurchmesser der O-Ringe zu dem Boden des Gehäusetopfes hin abnehmen, bevorzugt bei einer Anordnung der O-Ringe im Wesentlichen senkrecht zu der Rotationsachse der Pumpe, beispielsweise um eine Beschädigung der O-Ringe bei einem Einbau und/oder bei einem Ausbau zu verhindern. Die Durchmesser der O-Ringe können beispielsweise zu dem Boden des Gehäusetopfes hin stufenförmig abnehmen.

Beispielsweise kann das Fluidbeaufschlagungsvorrichtungsgehäuse eine Form aufweisen, welche aus Kegelstümpfen und/oder aus Zylindern mit unterschiedlichen Außendurchmessern, bevorzugt mit zu dem Boden des Gehäusetopfes hin abnehmenden Außendurchmesser, zusammengesetzt ist. Das Fluidbeaufschlagungsvorrichtungsgehäuse kann beispielsweise eine konische Form aufweisen.

Eine Außenwand des Fluidbeaufschlagungsvorrichtungsgehäuses und/oder der Stutzen und/oder das Röhrchen können beispielsweise mindestens eine umlaufende Nut und/oder mindestens einen umlaufenden Führungskanal aufweisen, insbesondere um den O-Ring oder die O-Ringe zu fixieren und/oder zu positionieren.

Die Fluidbeaufschlagungsvorrichtung kann mindestens eine interne Leckage und/oder mindestens eine externe Leckage umfassen. Die interne Leckage und/oder die externe Leckage können Einrichtungen sein, welche einen kontinuierlichen Durchfluss an Fluid durch zumindest einen Teil der Fluidbeaufschlagungsvorrichtung, beispielsweise durch die Pumpe, ermöglichen und/oder garantieren, zumindest sofern die Pumpe in Betrieb ist.

Die interne Leckage kann insbesondere das Ventil, insbesondere als regelbare interne Leckage, und/oder eine Blende aufweisen.

Die interne Leckage und/oder die externe Leckage können beispielsweise derart eingerichtet sein, dass bei einem Fluiddruck ungleich Null stets ein, vorzugsweise kontinuierlicher, Fluidstrom, vorzugsweise durch die Pumpe, ermöglicht wird.

Die interne Leckage und/oder die externe Leckage können insbesondere eingerichtet sein um die Kupplung geregelt mit Fluid aus dem Fluidsumpf zu beaufschlagen. Beispielsweise können die interne Leckage und/oder die externe Leckage eingerichtet sein um einen Fluiddruck und/oder einen Fluidvolumenstrom zu regeln. Die interne Leckage und/oder die externe Leckage können insbesondere eine Kennlinie der Fluidbeaufschlagungsvorrichtung hinsichtlich einer Regelbarkeit positiv beeinflussen. Die Kennlinie kann beispielsweise einen Zusammenhang zwischen einer Umdrehungsfrequenz der Pumpe und einem Druck an der Kupplung beschreiben.

Die externe Leckage kann insbesondere einen Abfluss des Fluides aus dem Fluidbeaufschlagungsvorrichtungsgehäuse, insbesondere aus dem Pumpengehäuseteil, aufweisen. Der Abfluss des Fluides kann bevorzugt in axialer Richtung eingerichtet sein. Alternativ oder zusätzlich kann der Abfluss des Fluids auch in radialer Richtung eingerichtet sein.

Die interne Leckage und/oder die externe Leckage können beispielsweise derart ausgestaltet sein, dass der Elektromotor von einem Leckageölstrom umspült und/oder gekühlt wird. Beispielsweise kann der Leckageölstrom radial aus dem Fluidbeaufschlagungsvorrichtungsgehäuse geführt werden und/oder in dem Inneren des Fluidbeaufschlagungsvorrichtungsgehäuses um den Elektromotor herum geführt werden, beispielsweise mittels Fluidleitungen und/oder Bohrungen innerhalb des Fluidbeaufschlagungsvorrichtungsgehäuses.

Alternativ oder zusätzlich kann der Leckageölstrom, beispielsweise ein Blendenvolumenstrom, direkt oder indirekt wieder dem Sauganschluss und/oder der Pumpe zugeführt werden.

Eine Blendenfunktion kann beispielsweise in der Pumpe und/oder in der Fluidbeaufschlagungsvorrichtung und/oder nach der Pumpe und/oder an dem Druckanschluss integriert sein. Der Druckanschluss kann beispielsweise ein Druckausgang sein. Die Blendenfunktion kann beispielsweise die Funktion der internen Leckage und/oder der externen Leckage haben, insbesondere zur Verbesserung der Regelbarkeit eines Fluidstroms durch die Pumpe.

Außerhalb des Fluidbeaufschlagungsvorrichtungsgehäuses kann der Leckageölstrom beispielsweise verwendet werden um beispielsweise Räder und/oder Wellen eines Getriebes zu schmieren.

Das Fluidbeaufschlagungsvorrichtungsgehäuse kann beispielsweise mindestens einen Abfluss für Fluid aus der externen Leckage umfassen. Der Abfluss kann beispielsweise mindestens eine Öffnung in dem Fluidbeaufschlagungsvorrichtungsgehäuse aufweisen.

Die interne Leckage kann einen geschlossenen Fluidkreislauf innerhalb des Fluidbeaufschlagungsvorrichtungsgehäuses und/oder innerhalb der Pumpe aufweisen. Die interne Leckage kann beispielsweise mindestens einen Zufluss und/oder mindestens einen Abfluss für Fluid innerhalb des Fluidbeaufschlagungsvorrichtungsgehäuse aufweisen. Bevorzugt kann die interne Leckage keinen Abfluss außerhalb des Fluidbeaufschlagungsvorrichtungsgehäuses aufweisen.

Die externe Leckage kann bevorzugt einen Abfluss aus dem Fluidbeaufschlagungsvorrichtungsgehäuse aufweisen.

Die Pumpe kann beispielsweise eine Gerotorpumpe sein. Die Pumpe kann mindestens einen Außenrotor und mindestens einen Innenrotor umfassen. Der Innenrotor kann beispielsweise von dem Elektromotor angetrieben sein. Der Außenrotor kann beispielsweise durch eine Drehung des Innenrotors angetrieben sein. Die Pumpe kann weiterhin mindestens eine Saugniere und/oder mindestens eine Druckniere aufweisen. Die Saugniere und/oder die Druckniere können nierenförmige Pumpenhohlräume sein. Die Saugniere kann beispielsweise mit dem Sauganschluss verbunden sein. Die Druckniere kann beispielsweise mit dem Druckanschluss verbunden sein. Die Saugniere und/oder die Druckniere sind bevorzugt eingerichtet um Strömungen innerhalb der Pumpe zu beeinflussen.

Die interne Leckage kann beispielsweise in die Pumpe, insbesondere in die Pumpengeometrie, integriert sein. Beispielsweise kann die interne Leckage einen fluidischen Kurzschluss in der Pumpe aufweisen. Alternativ oder zusätzlich kann die interne Leckage einen fluidischer Kurzschluss in dem Fluidbeaufschlagungsvorrichtungsgehäuse, insbesondere außerhalb der Pumpe, aufweisen.

Die interne Leckage kann beispielsweise eingerichtet sein um eine Blendenfunktion in die Pumpe selbst zu integrieren.

Die interne Leckage und/oder die Blendenfunktion können beispielsweise durch höhere Toleranzen als üblich bei der Pumpe realisiert sein. Die interne Leckage kann beispielsweise höhere Toleranzen, insbesondere größere Hohlräume und/oder Spalten, in der Pumpe als bei üblichen Pumpen aufweisen, insbesondere ein höheres Kopfspiel und/oder ein höheres Axialspiel und/oder ein höheres Radialspiel. Die interne Leckage kann beispielsweise Spalten an der Pumpe, insbesondere ein Axialspiel und/oder ein Kopfspiel und/oder ein Radialspiel, zwischen 1 µm und 1 mm, bevorzugt zwischen 0,01 mm und 0,5 mm, besonders bevorzugt von 0,02 mm bis 0,08 mm aufweisen.

Die innere Leckage kann beispielsweise durch mindestens eine Fase an der Pumpe und/oder durch mindestens eine Nut an der Pumpe realisiert sein, beispielsweise durch eine Fase und/oder eine Nut an dem Innenrotor der Pumpe und/oder durch eine Fase und/oder eine Nut an dem Außenrotor der Pumpe. Beispielsweise können die Pumpe und/oder der Innenrotor und/oder der Außenrotor mindestens zwei Fasen und/oder mindestens zwei Nuten aufweisen. Die Fasen und/oder die Nuten können insbesondere symmetrisch angeordnet sein, insbesondere derart dass eine symmetrische Strömung erreicht werden kann. Bei der Nut kann es sich beispielsweise um eine umlaufende Nut handeln. Die Nut kann beispielsweise ein Innenring und/oder ein Außenring sein. Die Nut kann beispielsweise an einem Dichtsteg der Pumpe, insbesondere an einem Kammerdurchlauf und/oder an einem Zahndurchlauf, angeordnet sein. Alternativ oder zusätzlich kann die Nut an einer Pumpenanlagenfläche und/oder an einem Pumpenboden und/oder an einem Pumpengehäuse, beispielsweise radial zu der Rotationsachse und/oder zu der Welle der Pumpe, angeordnet sein.

Alternativ hierzu können eine Geometrie der Saugniere und/oder eine Geometrie der Druckniere derart ausgestaltet sein, dass diese eine nötige interne Leckage für eine Regelung erzeugt. Die interne Leckage kann beispielsweise eine Verbindung zwischen der Saugniere und der Druckniere umfassen. Die Saugniere und/oder die Druckniere können bevorzugt ein schmales Ende und ein breites Ende aufweisen. Die Verbindung zwischen der Saugniere und der Druckniere kann bevorzugt zwischen dem schmalen Ende der Saugniere und dem schmalen Ende der Druckniere angeordnet sein.

Alternativ oder zusätzlich können eine interne Leckage und/oder eine Blendenfunktion durch einen seitlichen Abfluss und/oder durch einen radialen Kühlungsausgang realisiert sein.

Die Blendenfunktion und/oder die externe Leckage können beispielsweise in das Fluidbeaufschlagungsvorrichtungsgehäuse integriert sein.

Die interne Leckage und/oder die externe Leckage können mindestens eine Blende und/oder mindestens ein Ventil und/oder mindestens einen Filter und/oder mindestens einen Sensor, insbesondere mindestens einen Drucksensor und/oder mindestens einen Temperatursensor, umfassen. Die Blende kann beispielsweise einen Fluidleitungsabschnitt mit einem verringerten Querschnitt umfassen. Der Filter kann beispielsweise ein Druckfilter und/oder ein Saugfilter sein, beispielsweise wie oben beschrieben. Bei dem Sensor kann es sich beispielsweise um einen Sensor wie oben beschrieben handeln. Die Blende kann beispielsweise einen Durchmesser von 0,1 mm bis 5mm, bevorzugt von 0,5 mm bis 0,8 mm, besonders bevorzugt von 0,6 mm bis 0,75 mm bestragen, je nach Anwendung.

In dem Fluidbeaufschlagungsvorrichtungsgehäuse können beispielsweise mindestens zwei Blenden und/oder mindestens zwei Ventile und/oder mindestens vier Sensoren, insbesondere mindestens zwei Drucksensoren und/oder mindestens zwei Temperatursensoren und/oder mindestens zwei kombinierte Temperatur-Druck-Sensoren und/oder mindestens zwei Inkrementalsensoren, integriert sein, insbesondere, wenn in dem Fluidbeaufschlagungsvorrichtungsgehäuse mindestens zwei Pumpen integriert sind.

Die Blende kann beispielsweise eine regelbare Blende sein.

Das Ventil kann beispielsweise die Funktion einer regelbaren Blende aufweisen, Die Fluidbeaufschlagungsvorrichtung kann beispielsweise eingerichtet sein um mittels des Ventils die Blende zumindest teilweise zu öffnen und/oder zu schließen, beispielsweise abhängig von einer Fahrsituation und/oder einem Bedarf.

Wenn beispielsweise für mindestens einen Verbraucher der Fluidbeaufschlagungsvorrichtung, beispielsweise für mindestens eine Kupplung, schnell Fluid benötigt wird kann das Ventil zumindest teilweise geschlossen werden. Durch ein bedarfsgerechtes Öffnen und/oder Schließen des Ventils kann beispielsweise die Drehzahl des Elektromotors und/oder die Drehzahl der Pumpe so geregelt werden, dass keine Resonanzfrequenz des Getriebegehäuses angeregt und/oder verstärkt wird, beispielsweise bei einer Drehzahl am Kisspoint. Beispielsweise kann das Ventil bei tiefen Temperaturen weiter geöffnet sein als bei hohen Temperaturen, insbesondere um temperaturabhängige Änderungen der Zähigkeit des Fluides zumindest teilweise zu kompensieren.

Die Fluidbeaufschlagungsvorrichtung kann beispielsweise drei Pumpen und zwei Ventile aufweisen. Zwei der Pumpen können beispielsweise für eine Aktuierung jeweils einer Kupplung eingerichtet sein und eine Pumpe kann zur Kühlung, insbesondere der Kupplungen, eingerichtet sein. Die Pumpe, welche zur Kühlung eingerichtet sein kann, kann bevorzugt ohne Ventil ausgestaltet sein, insbesondere da zur Kühlung keine Steuerung notwendig sein kann.

Beispielsweise kann die Fluidbeaufschlagungsvorrichtung genau eine Ansteuerung aufweisen. Die Ansteuerung kann eingerichtet sein um alle Pumpen und/oder alle Elektromotoren, beispielsweise zwei oder drei Pumpen und/oder zwei oder drei Elektromotoren, anzusteuern. Die Ansteuerung kann weiterhin eingerichtet sein um alle Ventile, beispielsweise zwei Ventile, anzusteuern.

Die Verwendung einer einzigen Ansteuerung für alle Pumpen und/oder alle Elektromotoren und/oder aller Ventile kann vorteilhaft sein. Beispielsweise können hierdurch eine Anzahl von verwendeten Kabeln und/oder Kabelbäumen und/oder Ansteuerungen verringert werden. Weiterhin kann der Aufbau, beispielsweise die Endmontage, und/oder ein Ersatzteilaustausch unkomplizierter und/oder einfacher sein.

Beispielsweise kann zwischen der Pumpe und dem Ventil ein Filter, bevorzugt ein Sieb, angeordnet sein,
Das Fluidbeaufschlagungsvorrichtungsgehäuse kann mindestens ein Gehäuseteil umfassend den Elektromotor und/oder mindestens ein Gehäuseteil umfassend die Pumpe und/oder mindestens ein Gehäuseteil umfassend den Sensor, insbesondere den Drucksensor und/oder den Temperatursensor, und/oder mindestens ein Gehäuseteil umfassend das Ventil und/oder die Steuerung und/oder die Leistungselektronik und/oder mindestens ein Gehäuseteil umfassend die Schnittstelle umfassen.

Die Gehäuseteile können bevorzugt in der Reihenfolge Gehäuseteil umfassend den Elektromotor, Gehäuseteil umfassend die Pumpe, Gehäuseteil umfassend die Schnittstelle, Gehäuseteil umfassend das Ventil, Gehäuseteil umfassend den Sensor, insbesondere den Drucksensor und/oder den Temperatursensor angeordnet sein, beispielsweise als in sich geschlossene Anordnung.

Beispielsweise können der Sensor, insbesondere der Drucksensor und/oder der Temperatursensor, und das Ventil in einem Gehäuseteil angeordnet sein. Beispielsweise kann ansonsten die oben genannte Reihenfolge eingehalten werden mit dem Sensor und dem Ventil in einem Gehäuseteil.

Prinzipiell können die Gehäuseteile mit den jeweiligen Elementen auch in anderen Reihenfolgen angeordnet sein und ein oder mehrere der genannten Elemente können gemeinsam in einem Gehäuseteil angeordnet sein.

Die Vorteile der Anordnung in Gehäuseteilen können insbesondere in einer kompakten und/oder platzsparenden und/oder kostensparenden Bauweise zu finden sein.

Bevorzugt können die Leckage und/oder die interne Leckage und/oder die externe Leckage als Blendenfunktion in das Fluidbeaufschlagungsvorrichtungsgehäuse integriert sein.

Das Fluidbeaufschlagungsvorrichtungsgehäuse kann beispielsweise mindestens einen Zwischenboden aufweisen. Bevorzugt kann das Fluidbeaufschlagungsvorrichtungsgehäuse mindestens zwei Zwischenböden aufweisen. Der Zwischenboden kann eingerichtet sein, um den Elektromotor und/oder die Pumpe zu fixieren. Der Zwischenboden kann mindestens eine Öffnung, bevorzugt eine mittige Öffnung, zur Durchführung der E-Motorwelle aufweisen.

Innerhalb des Fluidbeaufschlagungsvorrichtungsgehäuses können die Elektroeinheit, der Inkrementalsensor, der Elektromotor, die Pumpe, der Druck- und/oder Temperatursensor, der Filter, die Blende, der Sauganschluss, der Druckanschluss in der genannten Reihenfolge von dem Gehäusedeckel aus entlang der Rotationsachse angeordnet sein.

Bevorzugt kann die Blende direkt in der Fluidbeaufschlagungsvorrichtung, beispielsweise einem Aktuator, angeordnet sein.

Im Rahmen der vorliegenden Erfindung kann als Blende sowohl eine Blende als Bauteil als auch ein Element, welches eine Blendenfunktion aufweist, beispielsweise eine innere Leckage, verstanden werden.

Das Pumpengehäuseteil und/oder das Leitungsgehäuseteil können beispielsweise mindestens zwei Pumpen und/oder mindestens zwei Fluidleitungen aufweisen.

Das Fluidbeaufschlagungsvorrichtungsgehäuse kann beispielsweise genau zwei Elektromotorgehäuseteile und genau ein Pumpengehäuseteil und genau zwei Ventilgehäuse aufweisen.

In dem Fluidbeaufschlagungsvorrichtungsgehäuse können mindestens zwei Pumpen und mindestens zwei Elektromotoren integriert sein. Beispielsweise können in dem Fluidbeaufschlagungsvorrichtungsgehäuse genau zwei Pumpen und genau zwei Elektromotoren integriert sein.

In dem Fluidbeaufschlagungsvorrichtungsgehäuse kann beispielsweise genau eine Elektroeinheit, beispielsweise genau eine Ansteuerung, integriert sein. Die Ansteuerung kann eingerichtet sein um alle Pumpen und/oder alle Elektromotoren, bevorzugt zwei Pumpen und/oder zwei Elektromotoren, anzusteuern. Die Ansteuerung kann weiterhin eingerichtet sein um alle Ventile, bevorzugt zwei Ventile, anzusteuern. Bei der Elektroeinheit kann es sich bevorzugt um eine Leistungselektronik handeln.

Die Fluidbeaufschlagungsvorrichtung kann bevorzugt zwei Fluidschnittstellen aufweisen.

Die zwei Elektromotoren und/oder die zwei Elektromotorgehäuseteile und/oder die zwei Ventile und/oder die zwei Fluidschnittstellen und/oder die zwei Sensoren, bevorzugt die zwei kombinierten Temperatur-Druck-Sensoren, und/oder die zwei Pumpen können zu einer achsparallelen Linie symmetrisch angeordnet sein. Eine Asymmetrie der Fluidbeaufschlagungsvorrichtung kann sich bevorzugt dadurch ergeben, dass die Fluidbeaufschlagungsvorrichtung bevorzugt nur einen Stecker aufweist, welcher insbesondere seitlich an dem Gehäusedeckel angeordnet sein kann.

Beispielsweise können in dem Fluidbeaufschlagungsvorrichtungsgehäuse der Elektromotor und die Pumpe und der Drucksensor und der Temperatursensor und die Blende integriert sein. Der Elektromotor und die Pumpe und der Drucksensor und der Temperatursensor und die Blende können über unterschiedliche Gehäuseteile verteilt angeordnet sein. In dem Fluidbeaufschlagungsvorrichtungsgehäuse kann beispielsweise die Leistungselektronik integriert sein. Alternativ hierzu kann das Fluidbeaufschlagungsvorrichtungsgehäuse ohne Leistungselektronik eingerichtet sein.

Beispielsweise können in dem Fluidbeaufschlagungsvorrichtungsgehäuse der Elektromotor und die Pumpe und der Drucksensor und der Temperatursensor und das Ventile integriert sein. Der Elektromotor und die Pumpe und der Drucksensor und der Temperatursensor und das Ventil können über unterschiedliche Gehäuseteile verteilt angeordnet sein. In dem Fluidbeaufschlagungsvorrichtungsgehäuse kann beispielsweise die Leistungselektronik integriert sein. Alternativ hierzu kann das Fluidbeaufschlagungsvorrichtungsgehäuse ohne Leistungselektronik eingerichtet sein.

Beispielsweise können in dem Fluidbeaufschlagungsvorrichtungsgehäuse zwei Elektromotoren und zwei Pumpen und zwei Drucksensoren und zwei Temperatursensoren und zwei Blenden integriert sein. Die zwei Elektromotoren und die zwei Pumpen und die zwei Drucksensoren und die zwei Temperatursensoren und die zwei Blenden können über unterschiedliche Gehäuseteile verteilt angeordnet sein. In dem Fluidbeaufschlagungsvorrichtungsgehäuse kann beispielsweise genau eine Leistungselektronik integriert sein. Alternativ hierzu kann das Fluidbeaufschlagungsvorrichtungsgehäuse ohne Leistungselektronik eingerichtet sein oder zwei Leistungselektroniken aufweisen. Beispielsweise können hierbei zwei Module mit je einem Elektromotor und einer Pumpe und einem Drucksensor und einem Temperatursensor und einer Blende zu einem großen Modul zusammengefasst sein.

Beispielsweise können in dem Fluidbeaufschlagungsvorrichtungsgehäuse zwei Elektromotoren und zwei Pumpen und zwei Drucksensoren und zwei Temperatursensoren und zwei Ventile integriert sein. Die zwei Elektromotoren und die zwei Pumpen und die zwei Drucksensoren und die zwei Temperatursensoren und die zwei Ventile können über unterschiedliche Gehäuseteile verteilt angeordnet sein. In dem Fluidbeaufschlagungsvorrichtungsgehäuse kann beispielsweise genau eine Leistungselektronik integriert sein. Alternativ hierzu kann das Fluidbeaufschlagungsvorrichtungsgehäuse ohne Leistungselektronik eingerichtet sein oder zwei Leistungselektroniken aufweisen. Beispielsweise können hierbei zwei Module mit je einem Elektromotor und einer Pumpe und einem Drucksensor und einem Temperatursensor und einem Ventil zu einem großen Modul zusammengefasst sein.

In einem weiteren Aspekt der vorliegenden Erfindung wird ein Getriebe für ein Kraftfahrzeug vorgeschlagen. Bei dem Getriebe kann es sich um eine Vorrichtung handeln, welche mindestens eine Getriebeeingangswelle, die mit einem Motor des Kraftfahrzeuges verbindbar ist, und mindestens eine Getriebeausgangswelle umfasst, die in einem eingebauten Zustand des Getriebes mit Antriebsrädern des Kraftfahrzeuges verbunden sein kann.

Das Getriebe kann beispielsweise ein Doppelkupplungsgetriebe sein. Beispielsweise kann das Getriebe ein Hybridgetriebe, umfassend mindestens eine E-Maschine, sein.

Das Getriebe, insbesondere das Doppelkupplungsgetriebe, kann beispielsweise ein automatisiertes Schaltgetriebe sein. Das Doppelkupplungsgetriebe kann beispielsweise mittels zweier Teilgetriebe einen vollautomatischen Gangwechsel ohne Zugkraftunterbrechung ermöglichen. Das Doppelkupplungsgetriebe kann beispielsweise mindestens eine Eingangswelle aufweisen. Das Doppelkupplungsgetriebe kann mindestens eine erste Kupplung, bevorzugt eine erste Reibkupplung und mindestens eine zweite Kupplung, bevorzugt eine zweite Reibkupplung, aufweisen. Das Doppelkupplungsgetriebe kann mindestens eine erste Ausgangswelle und mindestens eine zweite Ausgangswelle aufweisen. Eingangsglieder der Reibkupplungen können mit der Eingangswelle verbunden sein. Ausgangsglieder der Reibkupplungen können jeweils mit einer der beiden Ausgangswellen verbunden sind. Die Reibkupplungen können jeweils mittels einer Kolben/Zylinderanordnungen betätigbar sein.

Das Getriebe umfasst mindestens eine Fluidbeaufschlagungsvorrichtung, wie oben beschrieben. Bevorzugt kann das Getriebe mindestens zwei erfindungsgemäße Fluidbeaufschlagungsvorrichtungen umfassen, beispielsweise eine erste Fluidbeaufschlagungsvorrichtung für eine erste Kupplung und eine zweite Fluidbeaufschlagungsvorrichtung für eine zweite Kupplung. Die erste Fluidbeaufschlagungsvorrichtung kann eingerichtet sein um die erste Kupplung zu aktuieren. Die zweite Fluidbeaufschlagungsvorrichtung kann eingerichtet sein um die zweite Kupplung zu aktuieren. Zusätzlich kann das Getriebe eine dritte Fluidbeaufschlagungsvorrichtung aufweisen. Die dritte Fluidbeaufschlagungsvorrichtung kann eingerichtet sein um die erste Kupplung und/oder die zweite Kupplung zu kühlen.

Das Getriebe umfasst mindestens einen Fluidsumpf. Bei dem Fluidsumpf kann es sich beispielsweise um einen Ölsumpf handeln. Der Fluidsumpf kann eine Vorrichtung sein, welche eingerichtet ist, um das Fluid, insbesondere Öl, aufzunehmen. Der Fluidsumpf kann beispielsweise derart ausgestaltet sein, dass er Fluid derart aufnimmt, dass Zahnräder des Getriebes mit Fluid beaufschlagt werden können, beispielsweise zum Kühlen und/oder zum Schmieren. Bei dem Fluidsumpf kann es sich bevorzugt um einen Getriebesumpf handeln. Der Fluidsumpf kann beispielsweise mindestens einen Behälter und/oder mindestens einen Hohlraum in dem Getriebe umfassen, vorzugsweise in einem unteren Teil des Getriebes, in welchem sich aufgrund einer Gravitationskraft und/oder einer Zentrifugalkraft das Fluid, insbesondere das Öl, sammelt, beispielsweise in einem Ruhezustand des Getriebes. Der Fluidsumpf kann mindestens einen Tank umfassen.

Das Getriebe umfasst mindestens eine Kupplung. Bei der Kupplung kann es sich um eine Vorrichtung handeln, welche eingerichtet ist um eine Kraftübertragung zwischen mindestens zwei Wellen reversibel zu ermöglichen. Unter dem Ausdruck "reversibel" kann verstanden werden, dass eine Kraftübertragung zwischen den zwei Wellen beliebig häufig ermöglicht und/oder verhindert werden kann, beispielsweise gesteuert durch einen Fahrer und/oder durch eine automatisierte Steuerung.

Bei der Kupplung kann es sich bevorzugt um eine nasse Kupplung handeln. Eine nasse Kupplung kann bevorzugt derart mit Fluid beaufschlagt werden, dass diese durch das Fluid gekühlt wird. Zusätzlich kann die nasse Kupplung durch Fluid aktuiert werden. Insbesondere kann die nasse Kupplung hydraulisch aktuiert geöffnet und/oder geschlossen werden, insbesondere derart, dass eine Kraftübertragung zwischen den zwei Wellen ermöglicht und/oder verhindert werden kann.

Alternativ hierzu kann die Kupplung auch eine trockene Kupplung sein. Die trockene Kupplung kann beispielsweise hydraulisch aktuiert geöffnet und/oder geschlossen werden, insbesondere derart, dass eine Kraftübertragung zwischen den zwei Wellen ermöglicht oder verhindert wird.

Die Fluidbeaufschlagungsvorrichtung ist eingerichtet um die Kupplung geregelt mit Fluid aus dem Fluidsumpf zu beaufschlagen. Unter dem Ausdruck "geregelt" kann im Rahmen der vorliegenden Erfindung beispielsweise verstanden werden, dass ein Fluiddruck an der Kupplung definiert eingestellt und/oder verändert werden kann.

Die Fluidbeaufschlagungsvorrichtung kann eingerichtet sein, um Fluid aus dem Fluidsumpf zu der Kupplung zu führen und/oder zu pumpen und/oder mit einem Druck, insbesondere einem Fluiddruck, zu beaufschlagen.

Das Getriebe kann mindestens ein Getriebegehäuse umfassen. Das Getriebegehäuse kann eine Vorrichtung sein, in welcher zumindest teilweise mindestens ein Radsatz und/oder mindestens eine Eingangswelle und/oder mindestens eine Ausgangswelle aufgenommen sein können. Das Getriebegehäuse kann bevorzugt separat von dem Fluidbeaufschlagungsvorrichtungsgehäuse ausgestaltet sein. Das Getriebegehäuse kann beispielsweise ein Gussteil sein. Der Fluidsumpf kann beispielsweise zumindest teilweise Teil des Getriebegehäuses sein.

Das Getriebegehäuse kann beispielsweise getrennt von dem Fluidbeaufschlagungsvorrichtungsgehäuse ausgestaltet sein. Das Fluidbeaufschlagungsvorrichtungsgehäuse kann beispielsweise zumindest teilweise an und/oder in dem Getriebegehäuse montiert sein.

Das Fluidbeaufschlagungsvorrichtungsgehäuse kann zumindest teilweise innerhalb des Getriebegehäuses angeordnet sein. Beispielsweise kann das Fluidbeaufschlagungsvorrichtungsgehäuse komplett innerhalb des Getriebegehäuses angeordnet sein.

Bevorzugt kann das Fluidbeaufschlagungsvorrichtungsgehäuse teilweise innerhalb des Getriebegehäuses angeordnet sein. Beispielsweise kann zumindest der Gehäusedeckel außerhalb des Getriebegehäuses angeordnet sein und zumindest der Gehäusetopf kann innerhalb des Getriebegehäuses angeordnet sein.

Bevorzugt können das Getriebegehäuse und das Fluidbeaufschlagungsvorrichtungsgehäuse mechanisch und/oder fluidisch und/oder elektrisch miteinander verbunden und/oder verbindbar sein. Bevorzugt können das Getriebegehäuse und das Fluidbeaufschlagungsvorrichtungsgehäuse reversibel mechanisch und/oder reversibel fluidisch und/oder reversibel elektrisch miteinander verbunden und/oder verbindbar sein.

Das Getriebegehäuse kann beispielsweise mindestens eine Aussparung umfassen, wobei die Fluidbeaufschlagungsvorrichtung zumindest teilweise in der Aussparung aufgenommen sein kann. Die Aussparung kann beispielsweise ein Hohlraum sein und/oder eine Vertiefung in dem Getriebegehäuse. Die Aussparung kann beispielsweise eine Bohrung in dem Getriebegehäuse sein. Die Aussparung kann mindestens eine Schnittstelle aufweisen. Die Aussparung kann beispielsweise mindestens eine Fluidschnittstelle und/oder mindestens eine Informationsschnittstelle und/oder mindestens eine elektrische Schnittstelle aufweisen.

Das Getriebegehäuse kann bevorzugt genau eine Aussparung umfassen. Die Fluidbeaufschlagungsvorrichtung kann zumindest teilweise in der Aussparung aufgenommen sein kann.

Beispielsweise kann lediglich der Gehäusedeckel und/oder der Stecker oder ein Teil des Gehäusedeckels und/oder des Steckers außerhalb der Aussparung angeordnet sein.

Zwischen dem Getriebegehäuse und dem Fluidbeaufschlagungsvorrichtungsgehäuse können mindestens ein O-Ring, bevorzugt zwei O-Ringe, angeordnet sein. Beispielsweise können auf jeweils einer Fläche des Getriebegehäuses und des Fluidbeaufschlagungsvorrichtungsgehäuse ein O-Ring zwischen das Getriebegehäuse und Fluidbeaufschlagungsvorrichtungsgehäuse gelegt sein.

Das Getriebegehäuse kann eine oder mehrere Einrichtungen zur Kühlung des Elektromotors aufweisen. Die Einrichtung zur Kühlung des Elektromotors kann beispielsweise eine Wasserkühlung und/oder eine Luftkühlung umfassen.

Die Einrichtung zur Kühlung des Elektromotors kann beispielsweise eine Öffnung in dem Getriebegehäuse zu dem Fluidbeaufschlagungsvorrichtungsgehäuse hin aufweisen. Die Einrichtung zur Kühlung des Elektromotors kann beispielsweise eine Öffnung in dem Fluidbeaufschlagungsvorrichtungsgehäuse aufweisen.

Das Fluidbeaufschlagungsvorrichtungsgehäuse kann mit mindestens einer Befestigungseinrichtung an und/oder in dem Getriebegehäuse fixiert sein. Die Befestigungseinrichtung kann mindestens eine Schraube und/oder mindestens eine Mutter und/oder mindestens ein Gewinde und/oder mindestens eine Führungsschiene und/oder mindestens eine Klemmvorrichtung aufweisen. Bevorzugt kann das Fluidbeaufschlagungsvorrichtungsgehäuse an der Verschlussvorrichtung der Fluidbeaufschlagungsvorrichtung mittels der Befestigungseinrichtung an dem Getriebegehäuse fixiert sein oder fixiert werden, insbesondere reversibel.

Das Fluidbeaufschlagungsvorrichtungsgehäuse kann beispielsweise mit mindestens zwei Schrauben, bevorzugt mit fünf Schrauben, an dem Getriebegehäuse fixiert sein. Die Schraube oder die Schrauben können beispielsweise an dem Gehäusedeckel befestigt sein.

Das Getriebegehäuse kann mindestens eine Bohrung für einen Druckanschluss und/oder mindestens eine Bohrung für einen Sauganschluss umfassen. Bevorzugt kann das Getriebegehäuse mindestens eine Bohrung für einen Druckanschluss und mindestens eine Bohrung für einen Sauganschluss aufweisen.

Das Getriebe kann außerhalb des Fluidbeaufschlagungsvorrichtungsgehäuses mindestens einen Sensor, insbesondere mindestens einen Drucksensor und/oder mindestens einen Temperatursensor, und/oder mindestens einen Filter, insbesondere mindestens einen Druckfilter und/oder mindestens einen Saugfilter, und/oder mindestens eine Leckage umfassen. Der Sensor und/oder der Filter können wie oben beschrieben ausgestaltet sein.

Bevorzugt kann das Getriebe außerhalb des Fluidbeaufschlagungsvorrichtungsgehäuses mindestens einen Druckfilter und/oder mindestens einen Saugfilter aufweisen.

Bevorzugt kann mindestens ein Filter, bevorzugt ein Saugfilter, zwischen dem Fluidsumpf und der Fluidbeaufschlagungsvorrichtung angeordnet sein. Zwischen der Fluidbeaufschlagungsvorrichtung und der Kupplung kann beispielsweise mindestens ein Filter, insbesondere ein Hochdruckfilter, angeordnet sein. Zwischen der Pumpe und der Kupplung und/oder dem Filter, insbesondere dem Hochdruckfilter, kann beispielsweise der Sensor, insbesondere der Drucksensor und/oder der Temperatursensor, angeordnet sein, wobei der Sensor, insbesondere der Drucksensor und/oder der Temperatursensor, innerhalb oder außerhalb des Fluidbeaufschlagungsvorrichtungsgehäuses angeordnet sein kann.

In einem weiteren Aspekt der vorliegenden Erfindung wird ein Verfahren zur Montage einer Fluidbeaufschlagungsvorrichtung eines Getriebes, wie oben beschrieben, vorgeschlagen. Das Verfahren kann beispielsweise von Hand oder durch eine Vorrichtung, beispielsweise einen Roboter, ausgeführt werden.

Die Fluidbeaufschlagungsvorrichtung wird in ein Getriebegehäuse eingesetzt und mindestens eine Fluidschnittstelle der Fluidbeaufschlagungsvorrichtung wird mit dem Getriebegehäuse fluidisch verbunden. Beispielsweise kann die Fluidbeaufschlagungsvorrichtung in ein Getriebegehäuse, wie oben beschrieben, eingesetzt werden und gleichzeitig oder davor oder danach kann mindestens eine Fluidschnittstelle und/oder mindestens eine elektrische Schnittstelle der Fluidbeaufschlagungsvorrichtung mit dem Getriebegehäuse fluidisch und/oder elektrisch verbunden werden. Beispielsweise kann die Fluidbeaufschlagungsvorrichtung, bevorzugt als Modul, auf das Getriebegehäuse geschraubt werden. Alternativ hierzu kann die Fluidbeaufschlagungsvorrichtung in eine Bohrung des Getriebegehäuses gesteckt werden.

Die Fluidbeaufschlagungsvorrichtung kann als Modul für sich alleine beispielsweise in einem Fahrzeug demontiert werden, beispielsweise in einer Autowerkstatt, vorzugsweise ohne weitere Elemente des Getriebes und/oder des Fahrzeugs zu entfernen.

Die oben beschriebene Fluidbeaufschlagungsvorrichtung für ein Getriebe für ein Kraftfahrzeug, das oben beschriebene Getriebe für ein Kraftfahrzeug sowie das oben beschriebene Verfahren zur Montage einer Fluidbeaufschlagungsvorrichtung eines Getriebes weisen gegenüber bekannten Vorrichtungen und Verfahren zahlreiche Vorteile auf.

Beispielsweise können durch die erfindungsgemäße Fluidbeaufschlagungsvorrichtung Kosten bei der Getriebeherstellung gesenkt werden, beispielsweise bei der Gehäusefertigung und/oder bei der Teilebeschaffung, beispielsweise durch Skaleneffekte. Weiterhin kann bei der Getriebeherstellung beispielsweise eine aufwendige Montage einzelner Elemente der Fluidbeaufschlagungsvorrichtung, beispielsweise der Blende, entfallen, da bei der erfindungsgemäßen Fluidbeaufschlagungsvorrichtung die Elemente in das Fluidbeaufschlagungsvorrichtungsgehäuse integriert sind.

Weiterhin kann ein Ersatzteilaustausch, beispielsweise bei einer defekten Fluidbeaufschlagungsvorrichtung, durch den modulartigen Aufbau einfach erreicht werden.

Durch die erfindungsgemäße Fluidbeaufschlagungsvorrichtung können weiterhin optimalere Bauraumausnutzungen in Getrieben erreichte werden, beispielsweise wie in dem erfindungsgemäßen Getriebe.

Eine Integration der Blende und/oder der Blendenfunktion in dem Fluidbeaufschlagungsvorrichtungsgehäuse kann beispielsweise eine Komplexität des Getriebes erniedrigen. Dies kann beispielsweise zu einer einfacheren Montage des Getriebes und/oder zu einer Erhöhung der Präzision der Lagerung der Wellen und/oder der Rotationsachsen, beispielsweise der Pumpe, führen.

Bevorzugt kann die Blende direkt in der Fluidbeaufschlagungsvorrichtung, beispielsweise in einem Aktuator, angeordnet sein, sodass die Blende nicht als zusätzliches Bauteil benötigt wird und keine zusätzlichen Hydraulikleitungen in dem Getriebe notwendig sind.

Bei einer Integration der Blendenfunktion in das Fluidbeaufschlagungsvorrichtungsgehäuse können zusätzliche Bohrungen in dem Getriebegehäuse überflüssig sein. Weiterhin könnte hierbei der Elektromotor von einem Leckageölstrom umspült werden und hierdurch gekühlt werden. Weiterhin können ein Filter außerhalb der Fluidbeaufschlagungsvorrichtung, insbesondere ein Saugfilter und/oder ein Druckfilter, entfallen. Beispielsweise kann durch eine interne Leckage der Pumpe eine Blende überflüssig sein und somit kann kein Verstopfen dieser Blende und/oder des Filters außerhalb der Fluidbeaufschlagungsvorrichtung mehr auftreten. Weiterhin wäre ein Austausch der Blende und/oder des Filters einfacher möglich, beispielsweise durch Entnahme der einfach zugänglichen und/oder entfernbaren erfindungsgemäßen Fluidbeaufschlagungsvorrichtung.

Die erfindungsgemäße Fluidbeaufschlagungsvorrichtung kann in zahlreichen Getrieben zum Einsatz kommen, beispielsweise in dem Getriebe nach Anspruch 11. Ausführungsformen der Erfindung sind in den Figuren beispielhaft dargestellt und werden in der Beschreibung der Figuren näher erläutert. Es zeigen:
- Fig. 1: eine Querschnittdarstellung eines ersten Ausführungsbeispiels einer erfindungsgemäßen Fluidbeaufschlagungsvorrichtung;
- Fig. 2: eine Teildarstellung eines ersten Ausführungsbeispiels einer Gerotorpumpe einer erfindungsgemäßen Fluidbeaufschlagungsvorrichtung und/oder eines erfindungsgemäßen Getriebes;
- Fig. 3: eine Teildarstellung eines zweiten Ausführungsbeispiels einer Gerotorpumpe einer erfindungsgemäßen Fluidbeaufschlagungsvorrichtung und/oder eines erfindungsgemäßen Getriebes;
- Fig. 4: eine Teildarstellung eines dritten Ausführungsbeispiels einer Gerotorpumpe einer erfindungsgemäßen Fluidbeaufschlagungsvorrichtung und/oder eines erfindungsgemäßen Getriebes;
- Fig. 5: eine schematische Teildarstellung eines ersten Ausführungsbeispiels eines erfindungsgemäßen Getriebes;
- Fig. 6: eine schematische Teildarstellung eines zweiten Ausführungsbeispiels eines erfindungsgemäßen Getriebes;
- Fig. 7: eine schematische Teildarstellung eines dritten Ausführungsbeispiels eines erfindungsgemäßen Getriebes;
- Fig. 8: eine schematische Teildarstellung eines vierten Ausführungsbeispiels eines erfindungsgemäßen Getriebes;
- Fig. 9: eine Teildarstellung eines fünften Ausführungsbeispiels eines erfindungsgemäßen Getriebes;
- Fig. 10: eine Querschnittsdarstellung eines ersten Ausführungsbeispiels einer Fluidschnittstelle einer erfindungsgemäßen Fluidbeaufschlagungsvorrichtung und/oder eines erfindungsgemäßen Getriebes;
- Fig. 11: eine Querschnittsdarstellung eines zweiten Ausführungsbeispiels einer Fluidschnittstelle einer erfindungsgemäßen Fluidbeaufschlagungsvorrichtung und/oder eines erfindungsgemäßen Getriebes;
- Fig. 12: eine Querschnittsdarstellung eines dritten Ausführungsbeispiels einer Fluidschnittstelle einer erfindungsgemäßen Fluidbeaufschlagungsvorrichtung und/oder eines erfindungsgemäßen Getriebes;
- Fig. 13A: eine schematische Darstellung eines zweiten Ausführungsbeispiels einer erfindungsgemäßen Fluidbeaufschlagungsvorrichtung;
- Fig. 13B: eine schematische Darstellung eines dritten Ausführungsbeispiels einer erfindungsgemäßen Fluidbeaufschlagungsvorrichtung;
- Fig. 14A: eine schematische Darstellung eines vierten Ausfiihrungsbeispiels einer erfindungsgemäßen Fluidbeaufschlagungsvorrichtung;
- Fig. 14B: eine schematische Darstellung eines fünften Ausführungsbeispiels einer erfindungsgemäßen Fluidbeaufschlagungsvorrichtung;
- Fig. 15A: eine schematische Darstellung eines sechsten Ausführungsbeispiels einer erfindungsgemäßen Fluidbeaufschlagungsvorrichtung;
- Fig. 15B: eine schematische Darstellung eines siebten Ausführungsbeispiels einer erfindungsgemäßen Fluidbeaufschlagungsvorrichtung;
- Fig. 16A: eine schematische Darstellung eines achten Ausführungsbeispiels einer erfindungsgemäßen Fluidbeaufschlagungsvorrichtung;
- Fig. 16B: eine schematische Darstellung eines neunten Ausführungsbeispiels einer erfindungsgemäßen Fluidbeaufschlagungsvorrichtung;
- Fig. 17A: eine schematische Darstellung eines zehnten Ausführungsbeispiels einer erfindungsgemäßen Fluidbeaufschlagungsvorrichtung;
- Fig. 17B: eine schematische Darstellung eines elften Ausführungsbeispiels einer erfindungsgemäßen Fluidbeaufschlagungsvorrichtung;
- Fig. 18A: eine schematische Darstellung eines zwölften Ausführungsbeispiels einer erfindungsgemäßen Fluidbeaufschlagungsvorrichtung;
- Fig. 18B: eine schematische Darstellung eines dreizehnten Ausführungsbeispiels einer erfindungsgemäßen Fluidbeaufschlagungsvorrichtung;
- Fig. 19A: eine schematische Darstellung eines vierzehnten Ausführungsbeispiels einer erfindungsgemäßen Fluidbeaufschlagungsvorrichtung;
- Fig. 19B: eine schematische Darstellung eines fünfzehnten Ausführungsbeispiels einer erfindungsgemäßen Fluidbeaufschlagungsvorrichtung;
- Fig. 20A: eine schematische Darstellung eines sechzehnten Ausführungsbeispiels einer erfindungsgemäßen Fluidbeaufschlagungsvorrichtung;
- Fig. 20B: eine schematische Darstellung eines siebzehnten Ausführungsbeispiels einer erfindungsgemäßen Fluidbeaufschlagungsvorrichtung;
- Fig. 21A: eine schematische Darstellung eines achtzehnten Ausfiihrungsbeispiels einer erfindungsgemäßen Fluidbeaufschlagungsvorrichtung;
- Fig. 21B: eine schematische Darstellung eines neunzehnten Ausführungsbeispiels einer erfindungsgemäßen Fluidbeaufschlagungsvorrichtung; und
- Fig. 22: eine schematische Darstellung eines zwanzigsten Ausfiihrungsbeispiels einer erfindungsgemäßen Fluidbeaufschlagungsvorrichtung.

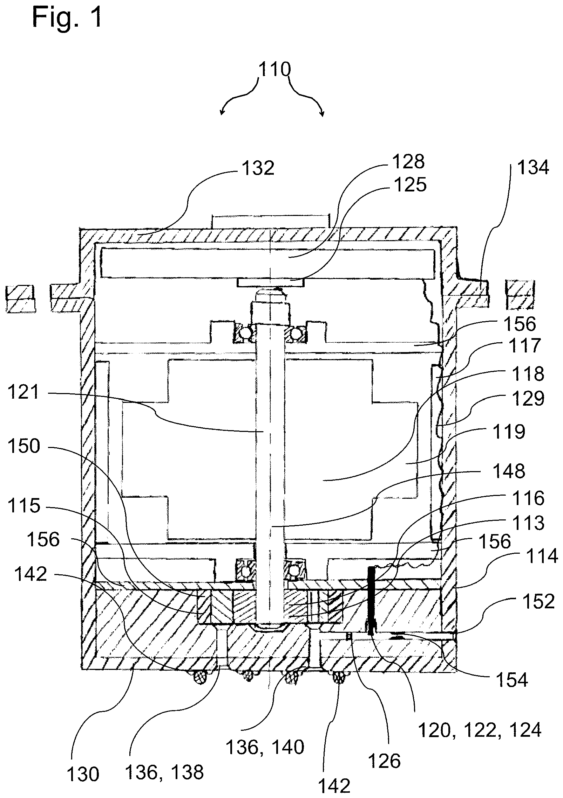

In Figur 1 ist ein erstes Ausführungsbeispiel einer erfindungsgemäßen Fluidbeaufschlagungsvorrichtung 110 für ein Getriebe 112 für ein Kraftfahrzeug dargestellt.

Die Fluidbeaufschlagungsvorrichtung 110 für ein Getriebe 112 für ein Kraftfahrzeug weist ein Fluidbeaufschlagungsvorrichtungsgehäuse 114 auf. In dem Fluidbeaufschlagungsvorrichtungsgehäuse 114 sind mindestens eine Pumpe 116 und mindestens ein Elektromotor 118 integriert. Die Fluidbeaufschlagungsvorrichtung 110 ist modulartig ausgestaltet.

Der Elektromotor 118 kann beispielsweise mindestens einen Stator 117 und/oder mindestens einen Rotor 119 und/oder mindestens eine E-Motorwelle 121 aufweisen.

In dem Fluidbeaufschlagungsvorrichtungsgehäuse 114 können mindestens ein Sensor 120, insbesondere mindestens ein Drucksensor 122 und/oder mindestens ein Temperatursensor 124, integriert sein. Der Sensor 120 kann beispielsweise ein kombinierter Druck-Temperatur- Sensor sein.

Der Sensor 120 kann beispielweise ein Inkrementalsensor 125 sein. Der Inkrementalsensor 125 kann beispielsweise eingerichtet sein um eine Drehfrequenz des Elektromotors 118 und/oder der Pumpe 116 zu erfassen.

In dem Fluidbeaufschlagungsvorrichtungsgehäuse 114 kann mindestens ein Filter 126 integriert sein.

In dem Fluidbeaufschlagungsvorrichtungsgehäuse 114 kann mindestens eine Elektroeinheit 128, beispielsweise eine Ansteuerung, integriert sein.

Die Fluidbeaufschlagungsvorrichtung 110 kann mindestens eine Kabeldurchführung 129 aufweisen. Die Kabeldurchführung 129 kann beispielsweise in das Fluidbeaufschlagungsvorrichtungsgehäuse 114 integriert sein. Die Kabeldurchführung 129 kann beispielsweise mindestens einen Sensor 120 und/oder den Elektromotor 118 mit der Elektroeinheit 128 verbinden.

Das Fluidbeaufschlagungsvorrichtungsgehäuse 114 kann mindestens einen Gehäusetopf 130 und mindestens einen Gehäusedeckel 132 aufweisen. Der Gehäusedeckel 132 kann beispielsweise mit dem Gehäusetopf 130 verbunden sein, vorzugsweise dauerhaft verbunden sein. Beispielsweise kann der Gehäusedeckel 132 mit dem Gehäusetopf 130 verschweist und/oder verstemmt sein. Beispielsweise kann der Gehäusedeckel 132 mit dem Gehäusetopf 130 mittels mindestens einer Verschlussvorrichtung 134 verbunden sein. Alternativ hierzu kann der Gehäusedeckel 132 reversibel mit dem Gehäusetopf 130 verbunden sein, insbesondere mittels mindestens einer Verschlussvorrichtung 134.

Die Fluidbeaufschlagungsvorrichtung 110 kann mindestens eine Fluidschnittstelle 136 umfassen. Die Fluidschnittstelle 136 kann mindestens einen Sauganschluss 138, beispielsweise an einer Saugseite, und mindestens einen Druckanschluss 140, beispielsweise an einer Druckseite, aufweisen. Die Fluidschnittstelle 136 kann mindestens einen O-Ring 142 zur Abdichtung der Fluidschnittstelle 136 umfassen.

Die Fluidschnittstelle 136 kann mindestens einen, bevorzugt zwei, Stutzen 144 aufweisen.

Die Fluidschnittstelle 136 kann mindestens ein, bevorzugt zwei, Verbindungsröhrchen 146 umfassen.

Der Sauganschluss 138 und/oder der Druckanschluss 140 können im Wesentlichen parallel zu einer Rotationsachse 148 der Pumpe 116 oder im Wesentlichen senkrecht zu der Rotationsachse 148 der Pumpe 116 ausgerichtet sein.

Die Fluidbeaufschlagungsvorrichtung 110 kann mindestens eine interne Leckage 150 und/oder mindestens eine externe Leckage 152 umfassen. Die interne Leckage 150 kann einen geschlossenen Fluidkreislauf innerhalb des Fluidbeaufschlagungsvorrichtungsgehäuses 114 und/oder innerhalb der Pumpe 116 aufweisen.

Die interne Leckage 150 und/oder die externe Leckage 152 können mindestens eine Blende 154 und/oder mindestens einen Filter 126 und/oder mindestens einen Sensor 120, insbesondere mindestens einen Drucksensor 122 und/oder mindestens einen Temperatursensor 124, umfassen.

Das Fluidbeaufschlagungsvorrichtungsgehäuse 114 kann beispielsweise mindestens einen Zwischenboden 156 aufweisen. Bevorzugt kann das Fluidbeaufschlagungsvorrichtungsgehäuse 114 mindestens zwei Zwischenböden 156 oder drei Zwischenböden 156 aufweisen. Der Zwischenboden 156 kann eingerichtet sein, um den Elektromotor 118 und/oder die Pumpe 116 zu fixieren. Der Zwischenboden 156 kann mindestens eine Öffnung, bevorzugt eine mittige Öffnung, zur Durchführung der E-Motorwelle 121 aufweisen.

Innerhalb des Fluidbeaufschlagungsvorrichtungsgehäuses 114 können die Elektroeinheit 128, der Inkrementalsensor 125, der Elektromotor 118, die Pumpe 116, der Drucksensor 122 und/oder der Temperatursensor 124, der Filter 126, die Blende 154, der Sauganschluss 138, der Druckanschluss 140 bevorzugt in der genannten Reihenfolge von dem Gehäusedeckel 132 aus entlang der Rotationsachse 148 der Pumpe 116 angeordnet sein, wie beispielsweise in Figur 1 dargestellt.

Figur 1 und die Figuren 13A bis 22 zeigen insbesondere Ausführungsbeispiele der erfindungsgemäßen Fluidbeaufschlagungsvorrichtung 110, bei welchen der Sauganschluss 138 und/oder der Druckanschluss 140 beispielsweise axial, insbesondere im Wesentlichen parallel zu der Rotationsachse 148 der Pumpe 116, angeordnet sein können, beispielsweise an dem Boden des Gehäusetopfes 130 und/oder an dem Boden des Gehäusedeckels 132, bevorzugt an dem Boden eines Pumpengehäuseteils 182.

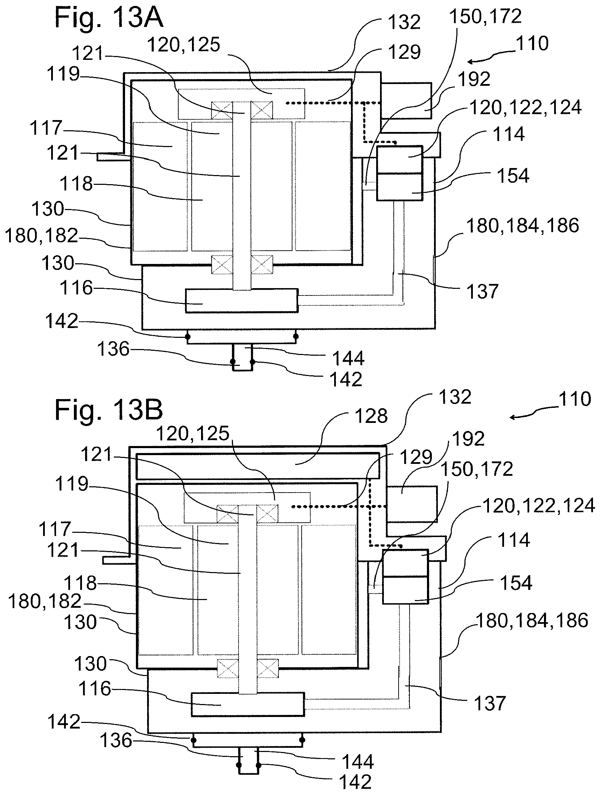

In den Figuren 13A bis 22 sind weitere Ausführungsbeispiele erfindungsgemäßer Fluidbeaufschlagungsvorrichtungen 110 für Getriebe 112 für ein Kraftfahrzeug dargestellt

Bei den Figuren 13A bis 22 handelt es sich um schematische Darstellungen von Ausführungsbeispielen erfindungsgemäßer Fluidbeaufschlagungsvorrichtungen 110. Die Ausführungsbeispiele gemäß der Figuren 13A bis 22 können insbesondere Elemente aufweisen, die nicht in den Figuren gezeigt sind. Beispielsweise können die Ausführungsbeispiele gemäß der Figuren 13A bis 22 Leitungen, insbesondere Fluidleitungen und/oder elektrische Leitungen, und/oder Filter und/oder Leckagen und/oder Blenden und/oder Leckagen und/oder Sensoren und/oder Gehäuseteile aufweisen, welche in den Figuren nicht explizit gezeigt sind.

Die Fluidbeaufschlagungsvorrichtung 110 für ein Getriebe 112 für ein Kraftfahrzeug nach den Figuren 13A bis 22 weist ein Fluidbeaufschlagungsvorrichtungsgehäuse 114 auf. In dem Fluidbeaufschlagungsvorrichtungsgehäuse 114 sind mindestens eine Pumpe 116 und mindestens ein Elektromotor 118 integriert. Die Fluidbeaufschlagungsvorrichtung 110 ist modulartig ausgestaltet.

Der Elektromotor 118 kann beispielsweise mindestens einen Stator 117 und/oder mindestens einen Rotor 119 und/oder mindestens eine E-Motorwelle 121 aufweisen.

In dem Fluidbeaufschlagungsvorrichtungsgehäuse 114 können mindestens ein Sensor 120, insbesondere mindestens ein Drucksensor 122 und/oder mindestens ein Temperatursensor 124, integriert sein. Der Sensor 120 kann beispielsweise ein kombinierter Druck-Temperatur- Sensor sein.

Der Sensor 120 kann beispielweise ein Inkrementalsensor 125 sein. Der Inkrementalsensor 125 kann beispielsweise eingerichtet sein um eine Drehfrequenz des Elektromotors 118 und/oder der Pumpe 116 zu erfassen.

In dem Fluidbeaufschlagungsvorrichtungsgehäuse 114 kann mindestens ein Filter 126 integriert sein.

In dem Fluidbeaufschlagungsvorrichtungsgehäuse 114 kann mindestens eine Elektroeinheit 128, beispielsweise eine Ansteuerung, integriert sein.

Bei der Elektroeinheit 128 kann es sich bevorzugt um eine Leistungselektronik handeln.

Die Fluidbeaufschlagungsvorrichtung 110 kann mindestens eine Kabeldurchführung 129 aufweisen. Die Kabeldurchführung 129 kann beispielsweise in das Fluidbeaufschlagungsvorrichtungsgehäuse 114 integriert sein. Die Kabeldurchführung 129 kann beispielsweise mindestens einen Sensor 120 und/oder den Elektromotor 118 mit der Elektroeinheit 128 verbinden. Die Kabeldurchführung 129 kann mindestens ein Kabel aufweisen.

Das Fluidbeaufschlagungsvorrichtungsgehäuse 114 kann mindestens einen Gehäusetopf 130 und mindestens einen Gehäusedeckel 132 aufweisen. Das Fluidbeaufschlagungsvorrichtungsgehäuse 114 kann beispielsweise mindestens zwei Gehäusetöpfe 130 als Gehäuseteile 180 aufweisen. Die Gehäusetöpfe können beispielsweise miteinander verschachtelt sein. Der Gehäusedeckel 132 kann beispielsweise mit dem Gehäusetopf 130 verbunden sein, vorzugsweise dauerhaft verbunden sein. Beispielsweise kann der Gehäusedeckel 132 mit dem Gehäusetopf 130 verschweist und/oder verstemmt sein. Beispielsweise kann der Gehäusedeckel 132 mit dem Gehäusetopf 130 mittels mindestens einer Verschlussvorrichtung 134 verbunden sein. Alternativ hierzu kann der Gehäusedeckel 132 reversibel mit dem Gehäusetopf 130 verbunden sein, insbesondere mittels mindestens einer Verschlussvorrichtung 134.

Bei den erfindungsgemäßen Fluidbeaufschlagungsvorrichtungen 110 gemäß der Ausführungsbeispiele nach den Figuren 13A bis 22 kann das Fluidbeaufschlagungsvorrichtungsgehäuse 114 mindestens zwei miteinander verbundene Gehäuseteile 180 aufweisen.

Insbesondere kann das Fluidbeaufschlagungsvorrichtungsgehäuse 114 mindestens ein Gehäuseteil 180 umfassend den Elektromotor 118, beispielsweise mindestens ein Elektromotorgehäuseteil 182 und mindestens ein Gehäuseteil 180 umfassend die Pumpe116, beispielsweise mindestens ein Pumpengehäuseteil 184, aufweisen.

Bei den in den Figuren 13A bis 21B gezeigten Ausführungsbeispielen erfindungsgemäßer Fluidbeaufschlagungsvorrichtungen 110 kann das Fluidbeaufschlagungsvorrichtungsgehäuse 114 genau ein Elektromotorgehäuseteil 182 und genau ein Pumpengehäuseteil 184 aufweisen.

Insbesondere bei den in den Figuren 13A, 13B und 15A bis 22 gezeigten Ausführungsbeispielen erfindungsgemäßer Fluidbeaufschlagungsvorrichtungen 110 kann das Fluidbeaufschlagungsvorrichtungsgehäuse 114 mindestens ein Leitungsgehäuseteil 186 aufweisen.

Insbesondere bei den in den Figuren 13A, 13B, 17A bis 18B und 21A bis 22 gezeigten Ausführungsbeispielen erfindungsgemäßer Fluidbeaufschlagungsvorrichtungen 110 kann das Leitungsgehäuseteil 186 mindestens eine Fluidleitung 137 aufweisen.

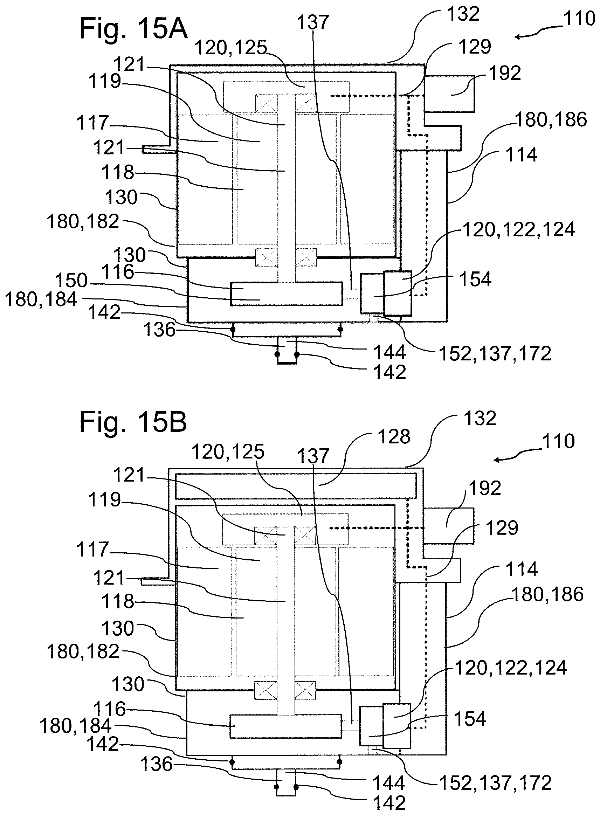

Insbesondere bei den in den Figuren 15A bis 16B und 19A bis 20B gezeigten Ausführungsbeispielen erfindungsgemäßer Fluidbeaufschlagungsvorrichtungen 110 kann das Leitungsgehäuseteil 186 mindestens eine elektrische Leitung aufweisen.

Insbesondere bei den in den Figuren 13A, 13B, 17A bis 18B und 21A bis 22 gezeigten Ausführungsbeispielen erfindungsgemäßer Fluidbeaufschlagungsvorrichtungen 110 kann das Leitungsgehäuseteil 186 und das Pumpengehäuseteil 184 als ein Gehäuseteil 180 ausgestaltet sein.

Alternativ oder zusätzlich können die Fluidbeaufschlagungsvorrichtungsgehäuse 114 der in den Figuren 13A bis 22 gezeigten Ausführungsbeispiele erfindungsgemäßer Fluidbeaufschlagungsvorrichtungen 110 mindestens ein Gehäuseteil 180 umfassend mindestens eine Blende 154 und/oder mindestens ein Ventil 190, beispielsweise mindestens ein Ventilgehäuseteil 188, aufweisen.

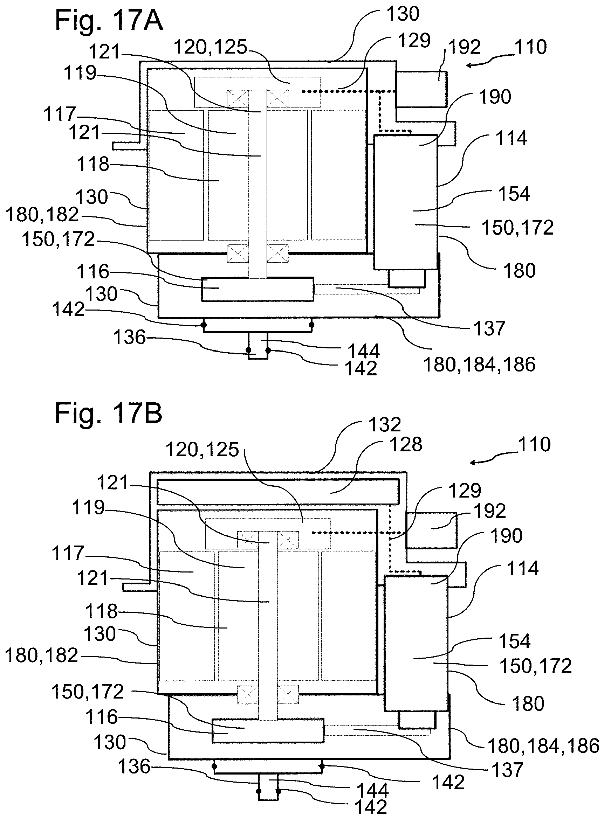

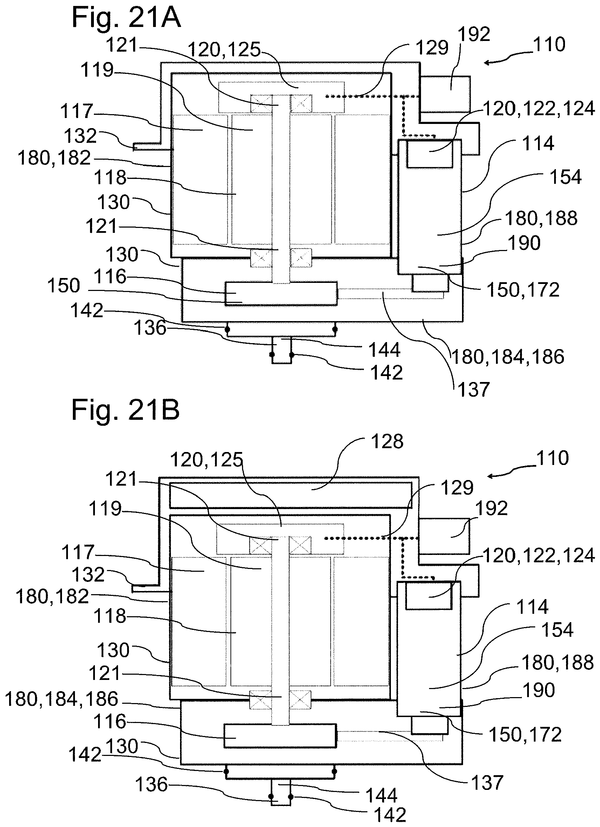

Das Ventilgehäuseteil 188 kann zumindest teilweise eine Außenwand des Fluidbeaufschlagungsvorrichtungsgehäuses 114 bilden, wie beispielsweise in den Ausführungsbeispielen nach den Figuren 17A, 17B, 21A und 21B.

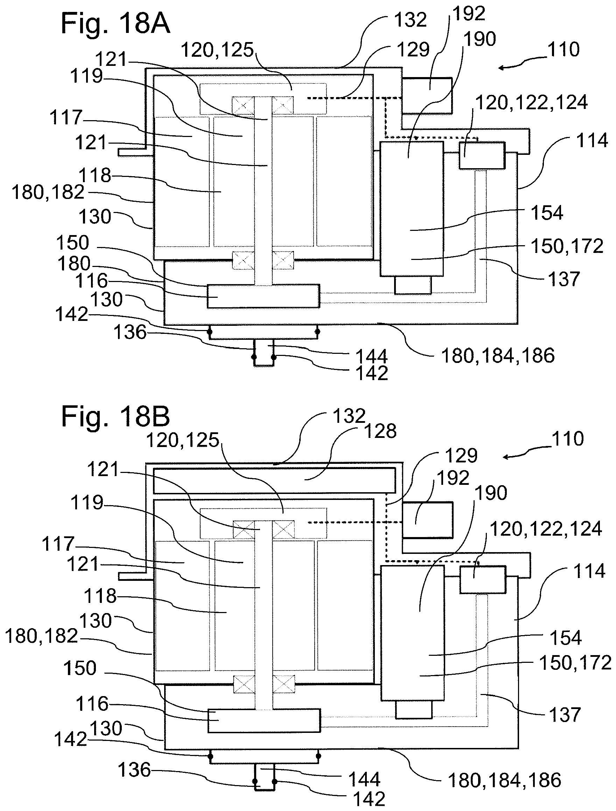

Prinzipiell kann das Ventilgehäuseteil 188 auch vollständig in dem Fluidbeaufschlagungsvorrichtungsgehäuse 114 integriert sein, wie beispielsweise in den Ausführungsbeispielen nach den Figuren 18A bis 20B und 22.

Die in den Figuren 13A bis 22 gezeigten Ausführungsbeispiele erfindungsgemäßer Fluidbeaufschlagungsvorrichtungen 110 können insbesondere mindestens einen Stecker 192 aufweisen. Der Stecker 192 kann eingerichtet sein, um zumindest einen Teil der Fluidbeaufschlagungsvorrichtung 110 mit elektrischer Energie und/oder mit mindestens einem Steuerungssignal zu versorgen. Alternativ oder zusätzlich kann der Stecker 192 eingerichtet sein um mindestens ein Signal, beispielsweise ein Messsignal, abzugreifen, Der Stecker 192 kann beispielsweise als elektrische Schnittstelle eingerichtet sein.

Bevorzugt können die in den Figuren 1 sowie 13A bis 22 gezeigten Ausführungsbeispiele erfindungsgemäßer Fluidbeaufschlagungsvorrichtungen 110 genau einen Stecker 192 aufweisen.

Der Stecker 192 kann bevorzugt seitlich an dem Fluidbeaufschlagungsvorrichtungsgehäuse 114 angeordnet sein. Besonders bevorzugt kann der Stecker 192 an einem Mantel des Gehäusetopfes 130 angeordnet sein.

Die Fluidbeaufschlagungsvorrichtung 110 kann mindestens eine Fluidschnittstelle 136 umfassen. Die Fluidschnittstelle 136 kann mindestens einen Sauganschluss 138, beispielsweise an einer Saugseite, und mindestens einen Druckanschluss 140, beispielsweise an einer Druckseite, aufweisen. Die Fluidschnittstelle 136 kann mindestens einen O-Ring 142 zur Abdichtung der Fluidschnittstelle 136 umfassen.

Die Fluidschnittstellen 136 nach den Ausführungsbeispielen nach den Figuren 13A bis 22 können bevorzugt zwei O-Ringe 142 zur Abdichtung der Fluidschnittstelle 136 umfassen. Die beiden O-Ringe 142 können bevorzugt unterschiedliche Durchmesser aufweisen.

Die Fluidschnittstelle 136 kann mindestens einen Stutzen 144, beispielsweise zwei Stutzen 144, aufweisen. Beispielsweise kann sich der Stutzen 144 zum von dem Fluidbeaufschlagungsvorrichtungsgehäuse 114 entfernten Ende hin verjüngen. Der Stutzen 144 kann beispielsweise zwei Rohre mit unterschiedlichen Durchmessern aufweisen. Der Stutzen 144 kann an dem von dem Fluidbeaufschlagungsvorrichtungsgehäuse 114 entfernten Ende einen kleineren Durchmesser aufweisen als an dem Austritt des Stutzens 144 aus dem Fluidbeaufschlagungsvorrichtungsgehäuse 114.

Der O-Ring 142, welcher sich am Ende des Stutzens 144 befindet kann bevorzugt einen kleineren Durchmesser haben als der O-Ring 142 am Austritt des Stutzens 144 aus dem Fluidbeaufschlagungsvorrichtungsgehäuse 114.

Die Fluidschnittstelle 136 kann mindestens ein, bevorzugt zwei, Verbindungsröhrchen 146 umfassen.

Der Sauganschluss 138 und/oder der Druckanschluss 140 können bevorzugt im Wesentlichen parallel zu einer Rotationsachse 148 der Pumpe 116 ausgerichtet sein.

Die Fluidbeaufschlagungsvorrichtung 110 kann mindestens eine interne Leckage 150 und/oder mindestens eine externe Leckage 152 umfassen. Die interne Leckage 150 kann einen geschlossenen Fluidkreislauf innerhalb des Fluidbeaufschlagungsvorrichtungsgehäuses 114 und/oder innerhalb der Pumpe 116 aufweisen.

Die interne Leckage 150 und/oder die externe Leckage 152 können mindestens eine Blende 154 und/oder mindestens ein Ventil 190 und/oder mindestens einen Filter 126 und/oder mindestens einen Sensor 120, insbesondere mindestens einen Drucksensor 122 und/oder mindestens einen Temperatursensor 124, umfassen.

Das Fluidbeaufschlagungsvorrichtungsgehäuse 114 kann beispielsweise mindestens einen Zwischenboden 156 aufweisen. Bevorzugt kann das Fluidbeaufschlagungsvorrichtungsgehäuse 114 mindestens zwei Zwischenböden 156 oder drei Zwischenböden 156 aufweisen. Der Zwischenboden 156 kann eingerichtet sein, um den Elektromotor 118 und/oder die Pumpe 116 zu fixieren. Der Zwischenboden 156 kann mindestens eine Öffnung, bevorzugt eine mittige Öffnung, zur Durchführung der E-Motorwelle 121 aufweisen.

Das Ausführungsbeispiel nach Figur 13A unterscheidet sich von dem Ausführungsbeispiel nach Figur 13B insbesondere dadurch, dass in dem Fluidbeaufschlagungsvorrichtungsgehäuse 114 des Ausführungsbeispiels nach Figur 13B mindestens eine Elektroeinheit 128, beispielsweise eine Ansteuerung, integriert sein kann. Besonders bevorzugt kann in dem Fluidbeaufschlagungsvorrichtungsgehäuse 114 des Ausführungsbeispiels nach Figur 13B eine Leistungselektronik integriert sein.

Bei den Ausführungsbeispielen erfindungsgemäßer Fluidbeaufschlagungsvorrichtungen 110 gemäß den Figuren 13A und 13B können das Fluidbeaufschlagungsvorrichtungsgehäuse 114 insbesondere mindestens ein Elektromotorengehäuseteil 182 und mindestens ein Pumpengehäuseteil 184 umfassen. In dem Fluidbeaufschlagungsvorrichtungsgehäuse 114 kann mindestens eine Fluidleitung 137 integriert sein.

In dem Pumpengehäuseteil 184 kann die Pumpe 116 und/oder die mindestens eine Fluidleitung 137 und/oder der mindestens eine Temperatursensor 124 und/oder der mindestens eine Drucksensor 122, bevorzugt ein kombinierter Temperatur-Druck-Sensor, und/oder die mindestens eine Blende 154 integriert sein.

An dem Pumpengehäuseteil 184 kann bevorzugt die Fluidschnittstelle 136 angeordnet sein. Das Pumpengehäuseteil 184 kann bevorzugt die Form eines Zylinders mit einem seitlichen Arm aufweisen. In dem Arm können insbesondere der Temperatursensor 124 und/oder der Drucksensor 122 und/oder die Blende 154 und/oder zumindest teilweise die Fluidleitungen 137 integriert sein.

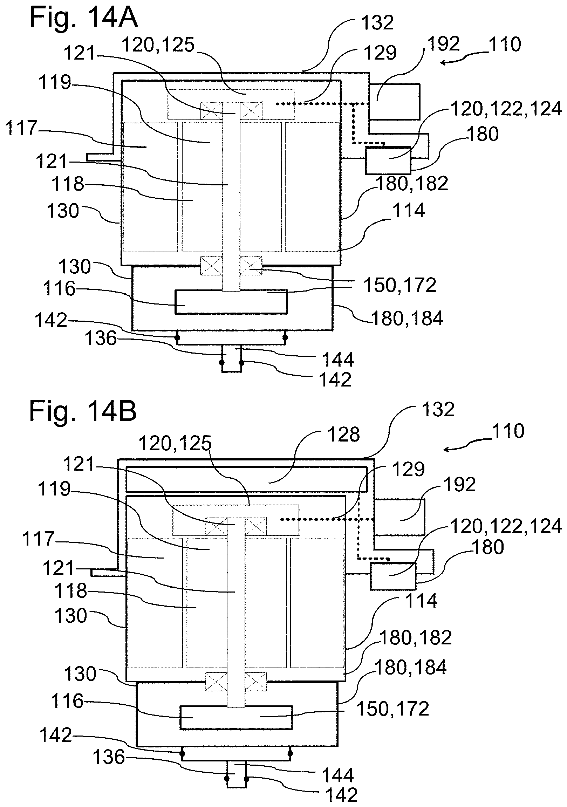

Das Ausführungsbeispiel nach Figur 14A unterscheidet sich von dem Ausführungsbeispiel nach Figur 14B insbesondere dadurch, dass in dem Fluidbeaufschlagungsvorrichtungsgehäuse 114 des Ausführungsbeispiels nach Figur 14B mindestens eine Elektroeinheit 128, beispielsweise eine Ansteuerung, integriert sein kann. Besonders bevorzugt kann in dem Fluidbeaufschlagungsvorrichtungsgehäuse 114 des Ausführungsbeispiels nach Figur 14B eine Leistungselektronik integriert sein.

Bei den Ausführungsbeispielen erfindungsgemäßer Fluidbeaufschlagungsvorrichtungen 110 gemäß den Figuren 14A und 14B können das Fluidbeaufschlagungsvorrichtungsgehäuse 114 insbesondere mindestens ein Elektromotorengehäuseteil 182 und mindestens ein Pumpengehäuseteil 184 umfassen.

In dem Pumpengehäuseteil 184 kann vorzugsweise die Pumpe 116 integriert sein.
In dem Elektromotorengehäuseteil 182 können vorzugsweise der Elektromotor 118 und/oder mindestens ein Sensor 120, bevorzugt der Inkrementalsensor 125, integriert sein.

Das Pumpengehäuseteil 184 und das Elektromotorengehäuseteil können vorzugsweise im Wesentlichen rotationssymmetrisch zu der Rotationsachse 148 der Pumpe 116 ausgestaltet sein. Allerdings kann beispielsweise der Gehäusedeckel 132 an zumindest einer radialen Seite nicht rotationssymmetrisch sein, sondern mindestens eine Kabeldurchführung 129 seitlich aufweisen. Weiterhin kann beispielsweise mindestens ein Stecker 192 und/oder mindestens ein Sensor 120, beispielsweise mindestens ein Temperatursensor 124 und/oder mindestens ein Drucksensor 122, bevorzugt ein kombinierter Temperatur-Druck-Sensor seitlich an dem Fluidbeaufschlagungsvorrichtungsgehäuse 114, beispielsweise an dem Gehäusedeckel 132, angeordnet sein. Der Stecker 192 und/oder der Temperatursensor 124 und/oder der Drucksensor 122, bevorzugt der kombinierte Temperatur-Druck-Sensor, können ganz oder teilweise in dem Gehäusedeckel 132 integriert sein, Bevorzugt kann der Stecker 192 außen an dem Gehäusedeckel 132 angeordnet sein und der Temperatursensor 124 und/oder der Drucksensor 122, bevorzugt der kombinierte Temperatur-Druck-Sensor, kann teilweise in dem Gehäusedeckel 132 integriert sein und teilweise außerhalb des Gehäusedeckels 132 angeordnet sein.

Der Inkrementalsensor 125 und der kombinierte Temperatur-Druck-Sensor können insbesondere über mindestens eine Kabeldurchführung 129 mit dem Stecker 192 verbunden sein.

Das Ausführungsbeispiel nach Figur 15A unterscheidet sich von dem Ausführungsbeispiel nach Figur 15B insbesondere dadurch, dass in dem Fluidbeaufschlagungsvorrichtungsgehäuse 114 des Ausführungsbeispiels nach Figur 15B mindestens eine Elektroeinheit 128, beispielsweise eine Ansteuerung, integriert sein kann. Besonders bevorzugt kann in dem Fluidbeaufschlagungsvorrichtungsgehäuse 114 des Ausführungsbeispiels nach Figur 15B eine Leistungselektronik integriert sein.

Bei den Ausführungsbeispielen erfindungsgemäßer Fluidbeaufschlagungsvorrichtungen 110 gemäß den Figuren 15A und 15B können das Fluidbeaufschlagungsvorrichtungsgehäuse 114 insbesondere mindestens ein Elektromotorengehäuseteil 182 und mindestens ein Pumpengehäuseteil 184 und mindestens ein Leitungsgehäuseteil 186 umfassen.

In dem Pumpengehäuseteil 184 kann die mindestens eine Pumpe 116 und/oder die mindestens eine Fluidleitung 137 und/oder der mindestens eine Temperatursensor 124 und/oder der mindestens eine Drucksensor 122, bevorzugt ein kombinierter Temperatur-Druck-Sensor, und/oder die mindestens eine Blende 154 zumindest teilweise integriert sein.

An dem Pumpengehäuseteil 184 kann bevorzugt die Fluidschnittstelle 136 angeordnet sein. Das Pumpengehäuseteil 184 kann bevorzugt die Form eines Zylinders aufweisen. Das Pumpengehäuseteil 184 kann bevorzugt eine seitliche Öffnung aufweisen. In der seitlichen Öffnung kann bevorzugt der Sensor 120, insbesondere der kombinierte Temperatur-Druck-Sensor 120, angeordnet sein. Die seitliche Öffnung des Pumpengehäuseteils 184 kann mittels des Leitungsgehäuseteils 186 mit dem Gehäusedeckel 132 verbunden sein.

Der kombinierte Temperatur-Druck-Sensor kann teilweise in dem Pumpengehäuseteil 184 und teilweise in dem Leitungsgehäuseteil 186 angeordnet sein.

Das Leitungsgehäuseteil 186 kann vorzugsweise eine elektrische Leitung zwischen dem Sensor 120, insbesondere dem kombinierten Temperatur-Druck-Sensor und dem Stecker 192 aufweisen. Der Stecker 192 kann bevorzugt wie auch der kombinierte Temperatur-Druck-Sensor seitlich zu der Rotationsachse 148 der Pumpe 116 angeordnet sein.

Zwischen dem Elektromotorgehäuseteil 182 und/oder dem Leitungsgehäuseteil 186 und/oder dem Pumpengehäuseteil 184 und/oder dem Gehäusedeckel 132 kann insbesondere eine Öffnung vorhanden sein.

Die Fluidbeaufschlagungsvorrichtung 110 gemäß der Figuren 15A und 15B können insbesondere eine externe Leckage 152 aufweisen. Die externe Leckage 152 kann insbesondere einen Abfluss des Fluides aus dem Fluidbeaufschlagungsvorrichtungsgehäuse 114, insbesondere aus dem Pumpengehäuseteil 184, aufweisen. Der Abfluss des Fluides kann bevorzugt in axialer Richtung angeordnet sein.

Ein Anschluss der elektrischen Leitung an dem Sensor 120, insbesondere an dem kombinierten Temperatur-Druck-Sensor, kann bevorzugt parallel zu der Rotationsachse 148, also axial, angeordnet sein, insbesondere auf der dem Elektromotor 118 abgewandten Seite.

In dem Arm können insbesondere der Temperatursensor 124 und/oder der Drucksensor 122 und/oder die Blende 154 und/oder zumindest teilweise die Fluidleitungen 137 integriert sein.

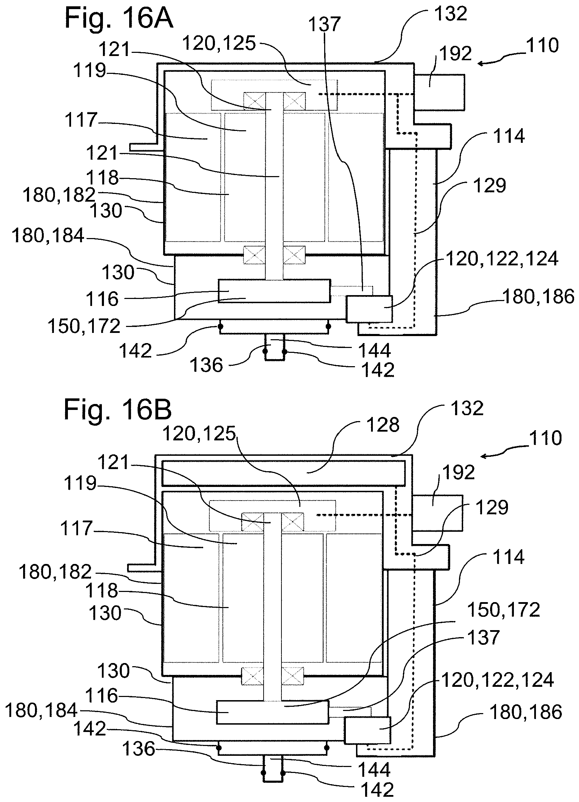

Das Ausführungsbeispiel nach Figur 16A unterscheidet sich von dem Ausführungsbeispiel nach Figur 16B insbesondere dadurch, dass in dem Fluidbeaufschlagungsvorrichtungsgehäuse 114 des Ausführungsbeispiels nach Figur 16B mindestens eine Elektroeinheit 128, beispielsweise eine Ansteuerung, integriert sein kann. Besonders bevorzugt kann in dem Fluidbeaufschlagungsvorrichtungsgehäuse 114 des Ausführungsbeispiels nach Figur 16B eine Leistungselektronik integriert sein.

Die Ausführungsbeispiele erfindungsgemäßer Fluidbeaufschlagungsvorrichtungen 110 nach den Figuren 16A und 16B unterscheiden sich von den Ausführungsbeispiel nach Figur 16A bzw. 16B insbesondere dadurch, dass die Ausführungsbeispiele erfindungsgemäßer Fluidbeaufschlagungsvorrichtungen 110 nach den Figuren 16A und 16B keine externe Leckage 152 und keine Blende 154, insbesondere in dem Pumpengehäuseteil, aufweisen.

Das Leitungsgehäuseteil 186 kann in axialer Richtung über das Pumpengehäuseteil 184 hinausragen. Ein Anschluss der elektrischen Leitung an dem Sensor 120, insbesondere an dem kombinierten Temperatur-Druck-Sensor, kann bevorzugt parallel zu der Rotationsachse 148, also axial, angeordnet sein, insbesondere auf der dem Elektromotor 118 abgewandten Seite.

Das Ausführungsbeispiel nach Figur 17A unterscheidet sich von dem Ausführungsbeispiel nach Figur 17B insbesondere dadurch, dass in dem Fluidbeaufschlagungsvorrichtungsgehäuse 114 des Ausführungsbeispiels nach Figur 17B mindestens eine Elektroeinheit 128, beispielsweise eine Ansteuerung, integriert sein kann. Besonders bevorzugt kann in dem Fluidbeaufschlagungsvorrichtungsgehäuse 114 des Ausführungsbeispiels nach Figur 17B eine Leistungselektronik integriert sein.

Die in den Figuren 17A und 17B gezeigten Ausführungsbeispiele weisen bevorzugt keinen Drucksensor 122 und/oder keinen Temperatursensor 124 auf. Prinzipiell können aber auch diese Ausführungsbeispiele mindestens einen Drucksensor 122 und/oder mindestens einen Temperatursensor 124 aufweisen.

Bei den Ausführungsbeispielen erfindungsgemäßer Fluidbeaufschlagungsvorrichtungen 110 gemäß den Figuren 17A und 17B können das Fluidbeaufschlagungsvorrichtungsgehäuse 114 insbesondere mindestens ein Elektromotorengehäuseteil 182 und mindestens ein Pumpengehäuseteil 184 und mindestens ein Ventilgehäuseteil 188 umfassen.

In dem Pumpengehäuseteil 184 können die mindestens eine Pumpe 116 und/oder die mindestens eine Fluidleitung 137 integriert sein.

An dem Pumpengehäuseteil 184 kann bevorzugt die Fluidschnittstelle angeordnet sein, insbesondere an einem von dem Elektromotor 118 abgewandten axialen Ende. Das Pumpengehäuseteil 184 kann bevorzugt die Form eines Zylinders mit einer Ausstülpung an einer Seite aufweisen. Das Pumpengehäuseteil 184 kann bevorzugt eine axiale Öffnung an der Ausstülpung aufweisen. In der axialen Öffnung können bevorzugt das Ventil 190 und/oder der Sensor 120, insbesondere der kombinierte Temperatur-Druck-Sensor, angeordnet sein. Das Pumpengehäuseteil 184 kann über das Ventilgehäuseteil 188 mit dem Gehäusedeckel 132 verbunden sein.

Der kombinierte Temperatur-Druck-Sensor und/oder das Ventil 190 können teilweise in dem Pumpengehäuseteil 184 und teilweise in dem Ventilgehäuseteil 188 angeordnet sein.

Der Gehäusedeckel 132 kann vorzugsweise eine elektrische Leitung zwischen dem Ventil 190 und/oder einem Sensor 120, insbesondere dem kombinierten Temperatur-Druck-Sensor, und dem Stecker 192 aufweisen. Der Stecker 192 kann bevorzugt wie auch das Ventil 190 und/oder der kombinierte Temperatur-Druck-Sensor seitlich zu der Rotationsachse 148 der Pumpe 116 angeordnet sein.

Beispielsweise kann die Fluidbeaufschlagungsvorrichtung 110 ohne Temperatursensor 124 und/oder ohne Drucksensor 122 und/oder ohne kombinierten Temperatur-Druck-Sensor ausgestaltet sein.

Zwischen dem Elektromotorgehäuseteil 182 und/oder dem Ventilgehäuseteil 188 und/oder dem Pumpengehäuseteil 184 und/oder dem Gehäusedeckel 132 kann insbesondere eine Öffnung vorhanden sein.

Die Fluidbeaufschlagungsvorrichtung 110 gemäß der Figuren 17A und 17B können insbesondere eine interne Leckage 150 aufweisen. Die interne Leckage 150 kann insbesondere das Ventil 190, insbesondere als regelbare interne Leckage 150, und/oder eine Blende 154 aufweisen.

Das Ausführungsbeispiel nach Figur 18A unterscheidet sich von dem Ausführungsbeispiel nach Figur 18B insbesondere dadurch, dass in dem Fluidbeaufschlagungsvorrichtungsgehäuse 114 des Ausführungsbeispiels nach Figur 18B mindestens eine Elektroeinheit 128, beispielsweise eine Ansteuerung, integriert sein kann. Besonders bevorzugt kann in dem Fluidbeaufschlagungsvorrichtungsgehäuse 114 des Ausführungsbeispiels nach Figur 18B eine Leistungselektronik integriert sein.

Bei den Ausführungsbeispielen erfindungsgemäßer Fluidbeaufschlagungsvorrichtungen 110 gemäß den Figuren 18A und 18B können das Fluidbeaufschlagungsvorrichtungsgehäuse 114 insbesondere mindestens ein Elektromotorengehäuseteil 182 und mindestens ein Pumpengehäuseteil 184 und mindestens ein Ventilgehäuseteil 188 umfassen.

In dem Fluidbeaufschlagungsvorrichtungsgehäuse 114, vorzugsweise in dem Pumpengehäuseteil 184, kann mindestens eine Fluidleitung 137 integriert sein.

Das Ventilgehäuseteil 188 kann zumindest teilweise in den Gehäusedeckel 132 und/oder in das Pumpengehäuseteil 184 integriert sein.

In dem Pumpengehäuseteil 184 können die Pumpe 116 und/oder die mindestens eine Fluidleitung 137 integriert sein.

An dem Pumpengehäuseteil 184 kann bevorzugt die Fluidschnittstelle 136 angeordnet sein. Das Pumpengehäuseteil 184 kann bevorzugt die Form eines Zylinders mit einem seitlichen Arm aufweisen. In dem Arm können insbesondere zumindest teilweise der Temperatursensor 124 und/oder der Drucksensor 122, bevorzugt der kombinierte Temperatur-Druck-Sensor, und/oder das Ventil 190 integriert sein.

Das Ventil 190 kann beispielsweise eingerichtet sein um die Funktion einer regelbaren Blende 154 einer internen Leckage 150 zu erfüllen.

Die Ausführungsbeispiele erfindungsgemäßer Fluidbeaufschlagungsvorrichtungen 110 gemäß den Figuren 18A und 18B können prinzipiell wie die Ausführungsbeispiele gemäße der Figuren 13A bzw. 13B ausgestaltet sein, wobei die Blende 154 der Figuren 18A und 18B durch das Ventil 190 als einstellbare Blende 154 ersetzt sein kann.

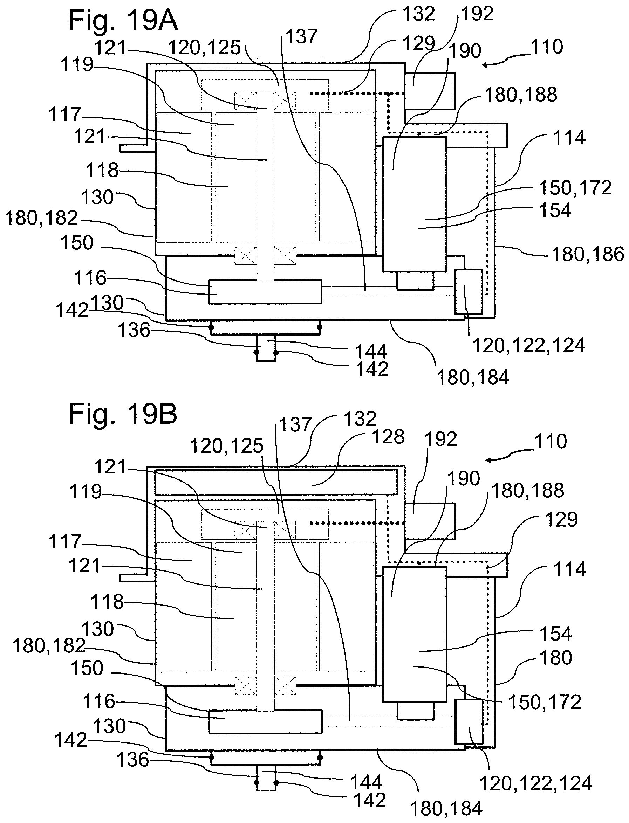

Das Ausführungsbeispiel nach Figur 19A unterscheidet sich von dem Ausführungsbeispiel nach Figur 19B insbesondere dadurch, dass in dem Fluidbeaufschlagungsvorrichtungsgehäuse 114 des Ausführungsbeispiels nach Figur 19B mindestens eine Elektroeinheit 128, beispielsweise eine Ansteuerung, integriert sein kann. Besonders bevorzugt kann in dem Fluidbeaufschlagungsvorrichtungsgehäuse 114 des Ausführungsbeispiels nach Figur 19B eine Leistungselektronik integriert sein.

Die Ausführungsbeispiele nach den Figuren 19A und 19B können wie die Ausführungsbeispiele nach Figur 18A bzw. 18B ausgestaltet sein, wobei das Fluidbeaufschlagungsvorrichtungsgehäuse 114 zusätzlich ein Leitungsgehäuseteil 186 aufweisen kann. Der Sensor 120, insbesondere der kombinierte Temperatur-Druck-Sensor kann bevorzugt nicht teilweise in dem Gehäusedeckel 132 und teilweise in dem Pumpengehäuseteil 184, wie in den Figuren 18A und 18B, sondern teilweise in dem Leitungsgehäuseteil 186 und teilweise in dem Pumpengehäuseteil 184 integriert sein.

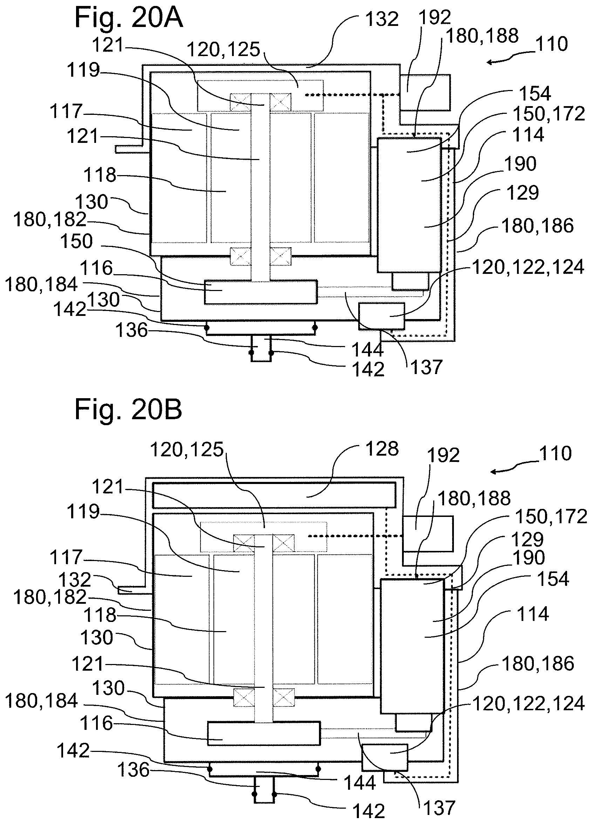

Das Ausführungsbeispiel nach Figur 20A unterscheidet sich von dem Ausführungsbeispiel nach Figur 20B insbesondere dadurch, dass in dem Fluidbeaufschlagungsvorrichtungsgehäuse 114 des Ausführungsbeispiels nach Figur 20B mindestens eine Elektroeinheit 128, beispielsweise eine Ansteuerung, integriert sein kann. Besonders bevorzugt kann in dem Fluidbeaufschlagungsvorrichtungsgehäuse 114 des Ausführungsbeispiels nach Figur 20B eine Leistungselektronik integriert sein.

Die Ausführungsbeispiele gemäß der Figuren 20A und 20B können sich von den Ausführungsbeispielen gemäß der Figuren 19A bzw. 20A insbesondere dadurch unterscheiden, dass der Sensor 120, insbesondere der Temperatursensor 124 und/oder der Drucksensor 122, bevorzugt der kombinierter Temperatur-Druck-Sensor, derart angeordnet ist, dass der Anschluss des Sensors 120, insbesondere des Temperatursensors 124 und/oder des Drucksensors 122, bevorzugt des kombinierten Temperatur-DruckSensors an die elektrische Leitung nicht radial sondern axial angeordnet ist und/oder der Sensor 120, insbesondere der Temperatursensor 124 und/oder der Drucksensor 122, bevorzugt der kombinierter Temperatur-Druck-Sensor keine direkte Verbindung mit der Fluidleitung 137 aufweisen kann.

Das Ausführungsbeispiel nach Figur 21A unterscheidet sich von dem Ausführungsbeispiel nach Figur 21B insbesondere dadurch, dass in dem Fluidbeaufschlagungsvorrichtungsgehäuse 114 des Ausführungsbeispiels nach Figur 21B mindestens eine Elektroeinheit 128, beispielsweise eine Ansteuerung, integriert sein kann. Besonders bevorzugt kann in dem Fluidbeaufschlagungsvorrichtungsgehäuse 114 des Ausführungsbeispiels nach Figur 21B eine Leistungselektronik integriert sein.

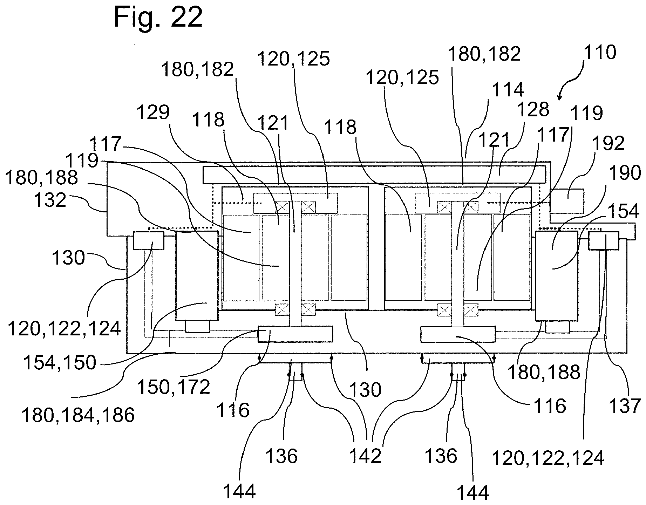

Die Ausführungsbeispiele gemäß der Figuren 21A und 21B können prinzipiell wie die Ausführungsbeispiele gemäße Figur 17A bzw. 17B ausgestaltet sein, wobei das Ausführungsbeispiel gemäß der Figuren 21A und 21B zusätzlich bevorzugt mindestens einen Temperatursensor 124 und/oder mindesten einen Drucksensor 122, bevorzugt mindestens einen kombinierten Temperatur-Druck-Sensor aufweisen kann, wobei dieser Sensor 120 bevorzugt zumindest teilweise in dem Ventilgehäuse integriert sein kann. Bei dem in Figur 22 gezeigten Ausführungsbeispiel einer erfindungsgemäßen Fluidbeaufschlagungsvorrichtung 110 können das Pumpengehäuseteil 184 und/oder das Leitungsgehäuseteil 186 bevorzugt zwei Pumpen 116 und/oder zwei Fluidleitungen 137 aufweisen.

Bei dem in Figur 22 gezeigten Ausführungsbeispiel einer erfindungsgemäßen Fluidbeaufschlagungsvorrichtung 110 kann das Fluidbeaufschlagungsvorrichtungsgehäuse 114 genau zwei Elektromotorgehäuseteile 182 und genau ein Pumpengehäuseteil 184 und genau zwei Ventilgehäuse aufweisen.

Das Ausführungsbeispiel nach Figur 22 kann insbesondere zwei Ventilgehäuseteile 188 aufweisen.

In dem Fluidbeaufschlagungsvorrichtungsgehäuse 114 des in Figur 22 gezeigten Ausführungsbeispiels können mindestens zwei Pumpen 116 und mindestens zwei Elektromotoren 118 integriert sein. Bevorzugt können in dem Fluidbeaufschlagungsvorrichtungsgehäuse 114 des in Figur 22 gezeigten Ausführungsbeispiels genau zwei Pumpen 116 und genau zwei Elektromotoren 118 integriert sein.

In dem Fluidbeaufschlagungsvorrichtungsgehäuse 114 des Ausführungsbeispiels nach Figur 22 kann bevorzugt genau eine Elektroeinheit 128, beispielsweise genau eine Ansteuerung, integriert sein. Die Ansteuerung kann eingerichtet sein um alle Pumpen 116 und/oder alle Elektromotoren 118, bevorzugt zwei Pumpen 116 und/oder zwei Elektromotoren 118, anzusteuern. Die Ansteuerung kann weiterhin eingerichtet sein um alle Ventile 190, bevorzugt zwei Ventile 190, anzusteuern. Bei der Elektroeinheit 128 kann es sich bevorzugt um eine Leistungselektronik handeln.

Die Fluidbeaufschlagungsvorrichtung 110 gemäß dem Ausführungsbeispiel nach Figur 22 kann bevorzugt zwei Fluidschnittstellen 136 aufweisen.

Bei dem in Figur 22 gezeigten Ausführungsbeispiel einer erfindungsgemäßen Fluidbeaufschlagungsvorrichtung 110 können die zwei Elektromotoren 118 und/oder die zwei Elektromotorgehäuseteile 182 und/oder die zwei Ventile 190 und/oder die zwei Fluidschnittstellen 136 und/oder die zwei Sensoren 120, bevorzugt die zwei kombinierten Temperatur-Druck-Sensoren, und/oder die zwei Pumpen 116 zu einer achsparallelen Linie symmetrisch angeordnet sein. Eine Asymmetrie der Fluidbeaufschlagungsvorrichtung 110 kann sich bevorzugt dadurch ergeben, dass die Fluidbeaufschlagungsvorrichtung 110 bevorzugt nur einen Stecker 192 aufweist, welcher insbesondere seitlich an dem Gehäusedeckel 132 angeordnet sein kann.

In einem weiteren Aspekt der vorliegenden Erfindung wird ein Getriebe 112 für ein Kraftfahrzeug vorgeschlagen. Das Getriebe 112 umfasst mindestens eine Fluidbeaufschlagungsvorrichtung 110 wie oben beschrieben. Das Getriebe 112 umfasst mindestens einen Fluidsumpf 162. Das Getriebe 112 umfasst mindestens eine Kupplung 178. Die Fluidbeaufschlagungsvorrichtung 110 ist eingerichtet um die Kupplung 178 geregelt mit Fluid aus dem Fluidsumpf 162 zu beaufschlagen.

Die Pumpe 116 kann beispielsweise eine Gerotorpumpe sein. Die Pumpe 116 kann mindestens einen Außenrotor 115 und mindestens einen Innenrotor 113 umfassen. Der Innenrotor 113 kann beispielsweise von dem Elektromotor 118 angetrieben sein. Der Außenrotor 115 kann beispielsweise durch eine Drehung des Innenrotors 113 angetrieben sein. Die Pumpe 116 kann weiterhin mindestens eine Saugniere 123 und/oder mindestens eine Druckniere 127 aufweisen. Die Saugniere 123 und/oder die Druckniere 127 können bevorzugt drehfest angeordnet sein, beispielsweise relativ zu dem Fluidbeaufschlagungsvorrichtungsgehäuse 114. Die Saugniere 123 und/oder die Druckniere 127 können nierenförmige Pumpenhohlräume sein. Die Saugniere 123 kann beispielsweise mit dem Sauganschluss 138 verbunden sein. Die Druckniere 127 kann beispielsweise mit dem Druckanschluss 140 verbunden sein.

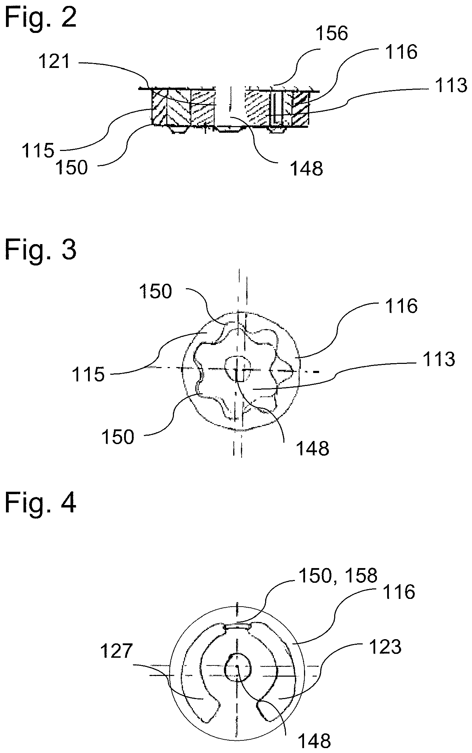

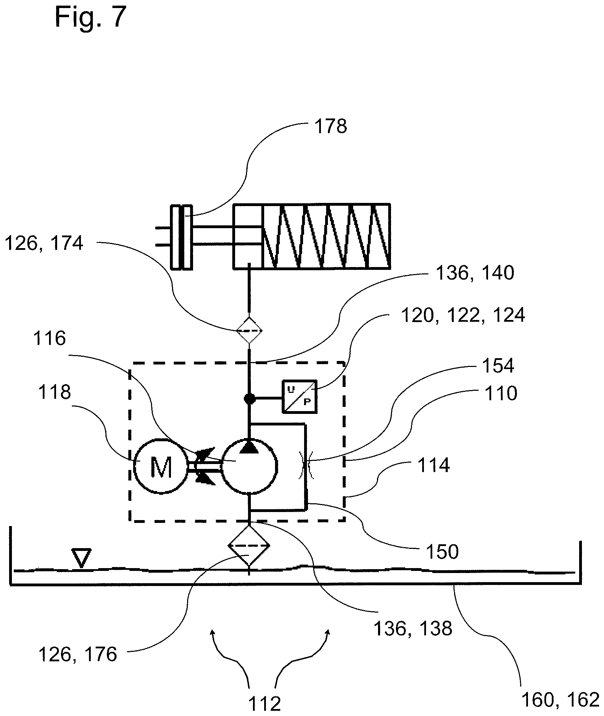

Bevorzugt kann die Pumpe 116 mindestens die interne Leckage 150 aufweisen. Beispielsweise können die Blende 154 und/oder eine Blendenfunktion in der Pumpe 116 integriert sein. Die Figuren 2, 3 und 4 zeigen Darstellungen von verschiedenen Pumpen 116 von Ausführungsbeispielen der erfindungsgemäßen Fluidbeaufschlagungsvorrichtung 110 und/oder des erfindungsgemäßen Getriebes 112. Die Figuren 2, 3 und 4 zeigen insbesondere verschiedene Möglichkeiten die interne Leckage 150 und/oder die Blende 154 und/oder die Blendenfunktion in die Pumpe 116 zu integrieren. Hierbei können eine Blendenfunktion und/oder die interne Leckage 150 durch höhere Toleranzen und/oder durch höhere Abstandsmaße realisiert sein. Beispielsweise kann die Pumpe 116 ein höheres Axialspiel, wie in Figur 2 dargestellt, und/oder ein höheres Radialspiel und/oder ein höheres Kopfspiel, wie in Figur3 dargestellt, und/oder eine Verbindung 158 zwischen der Saugniere 123 und der Druckniere 127, wie in den Figuren 4 und 7 dargestellt, aufweisen. Die Saugniere 123 und/oder die Druckniere 127 können bevorzugt ein schmales Ende und ein breites Ende aufweisen. Die Verbindung 158 zwischen der Saugniere 123 und der Druckniere 127 kann bevorzugt zwischen dem schmalen Ende der Saugniere 123 und dem schmalen Ende der Druckniere 127 angeordnet sein.

Die Saugniere 123 und/oder die Druckniere 127 können insbesondere mindestens eine Nut und/oder mindestens eine Fase in einer Nierengeometrie aufweisen.

Beispielsweise kann die Pumpe 116 ein Axialspiel und/oder ein Radialspiel und/oder ein Kopfspiel von 0,001 mm bis 1 mm, bevorzugt von 0,01 mm bis 0,5 mm, besonders bevorzugt von 0,02 mm bis 0,1 mm aufweisen.

Alternativ oder zusätzlich können eine interne Leckage 150 und/oder eine Blendenfunktion durch einen seitlichen Abfluss und/oder durch einen radialen Kühlungsausgang realisiert sein.

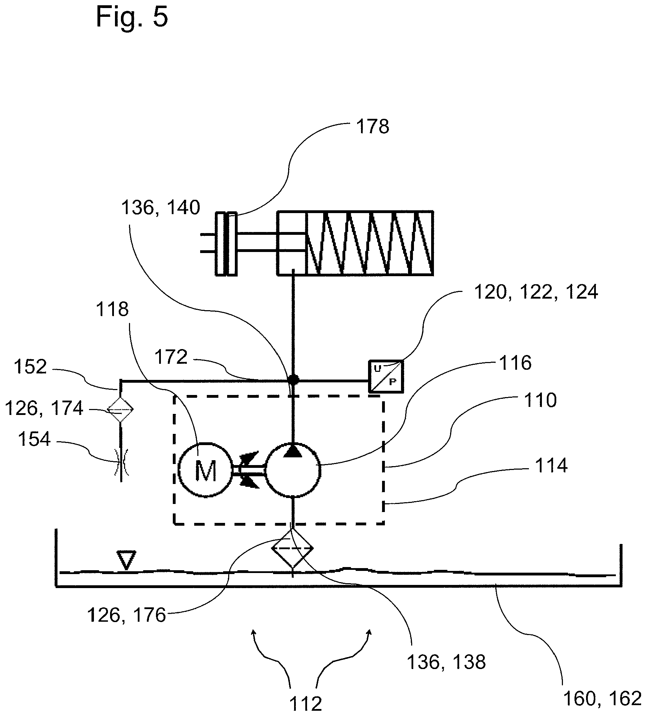

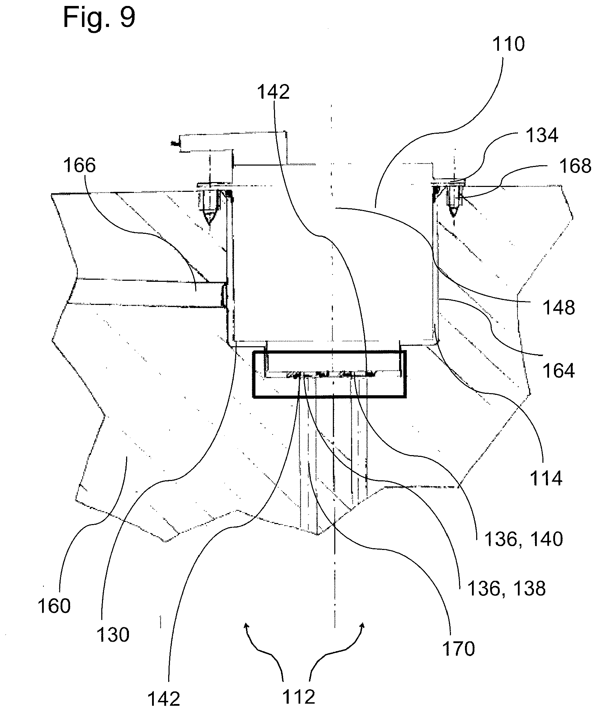

In den Figuren 5 bis 8 sind schematisch Teildarstellung von Ausführungsbeispielen des erfindungsgemäßen Getriebes 112 dargestellt. Im Rahmen der vorliegenden Erfindung kann das schematische Symbol für eine Blende 154 sowohl als Blende 154 als auch als Ersatzschaltbild für die Blendenfunktion, beispielsweise als interne Leckage 150, verstanden werden. Die erfindungsgemäßen Getriebe 112 können mindestens eine Blende 154 und/oder mindestens eine Blendenfunktion aufweisen. In den Figuren 9 bis 12 sind Teildarstellungen von Ausführungsbeispielen des erfindungsgemäßen Getriebes 112 als Querschnittszeichnungen dargestellt.

Das Getriebe 112 kann mindestens ein Getriebegehäuse 160 umfassen. In den Figuren 5 bis 8 ist das Getriebe 112 nur teilweise schematisch dargestellt, insbesondere mit Fluidsumpf 162. Das Getriebegehäuse 160 kann bevorzugt separat von dem Fluidbeaufschlagungsvorrichtungsgehäuse 114 ausgestaltet sein.

Das Getriebegehäuse 160 kann mindestens eine Aussparung 164 umfassen, wobei die Fluidbeaufschlagungsvorrichtung 110 zumindest teilweise in der Aussparung 164 aufgenommen sein kann.

Zwischen dem Getriebegehäuse 160 und dem Fluidbeaufschlagungsvorrichtungsgehäuse 114 können mindestens ein O-Ring 142, bevorzugt zwei O-Ringe 142, angeordnet sein.

Das Getriebegehäuse 160 kann eine Einrichtung 166 zur Kühlung des Elektromotors 118 aufweisen.

Das Fluidbeaufschlagungsvorrichtungsgehäuse 114 kann mit mindestens einer Befestigungseinrichtung 168 an dem Getriebegehäuse 160 fixiert sein.

Das Getriebegehäuse 160 kann mindestens eine Bohrung 170 für einen Druckanschluss 140 und/oder mindestens eine Bohrung 170 für einen Sauganschluss 138 umfassen.

Das Getriebe 112 kann außerhalb des Fluidbeaufschlagungsvorrichtungsgehäuses 114 mindestens einen Sensor 120, insbesondere mindestens einen Drucksensor 122 und/oder mindestens einen Temperatursensor 124, und/oder mindestens einen Filter 126 und/oder mindestens eine Leckage 172 umfassen.

Die Fluidbeaufschlagungsvorrichtung 110 und/oder das Getriebe 112 können mindestens eine Leckage 172, insbesondere mindestens eine interne Leckage 150 und/oder mindestens eine externe Leckage 152, aufweisen.

In Figur 5 ist ein Teil eines Ausführungsbeispiels eines erfindungsgemäßen Getriebes 112 dargestellt, wobei das Getriebe 112 eine Leckage 172 aufweist. Die Leckage 172 kann hierbei als Fluidleitung 137 von einem Leitungsabschnitt zwischen der Pumpe 116 und der Kupplung 178 zu dem Fluidsumpf 162 ausgestaltet sein. Der Leitungsabschnitt kann bevorzugt außerhalb der Fluidbeaufschlagungsvorrichtung 110 angeordnet sein. Die Fluidleitung 137 kann mindestens einen Filter 126 und/oder mindestens eine Blende 154 aufweisen. Das in Figur 5 dargestellte Getriebe 112 kann insbesondere ein Fluidbeaufschlagungsvorrichtungsgehäuse 114 umfassen, in welchem ein Elektromotor 118 und eine Pumpe 116 integriert sein können.

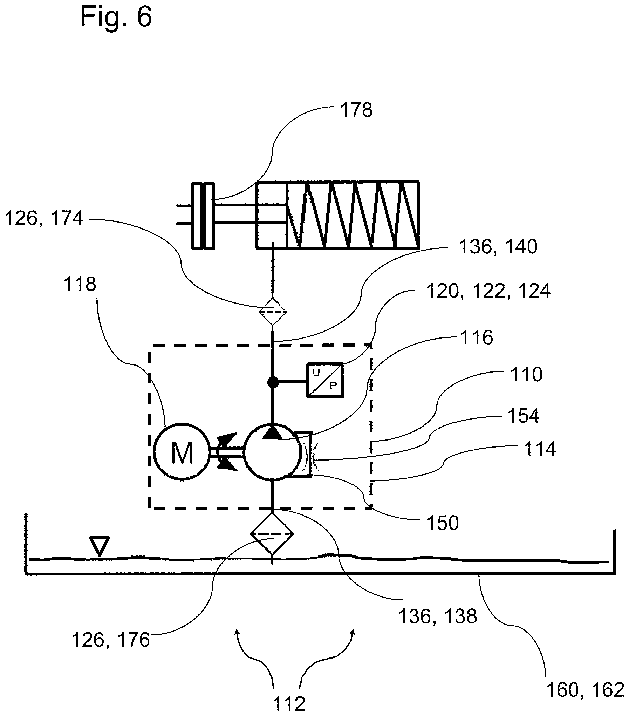

In den Figuren 6 und 7 sind Ausführungsbeispiele der erfindungsgemäßen Fluidbeaufschlagungsvorrichtung 110 und/oder des erfindungsgemäßen Getriebes 112 mit einer internen Leckage 150, insbesondere innerhalb der Fluidbeaufschlagungsvorrichtung 110 und/oder innerhalb des Fluidbeaufschlagungsvorrichtungsgehäuses 114, dargestellt. Figur 6 zeigt eine interne Leckage 150, wobei die Leckage 172 in die Pumpe 116 integriert sein kann, beispielsweise durch einen fluidischen Kurzschluss innerhalb der Pumpe 116. Das in Figur 6 dargestellte Getriebe 112 kann insbesondere ein Fluidbeaufschlagungsvorrichtungsgehäuse 114 umfassen, in welchem ein Elektromotor 118 und eine Pumpe 116 und ein Sensor 120, insbesondere ein Drucksensor 122, und eine interne Leckage 150 in der Pumpe 116 integriert sind.

Figur 7 zeigt eine interne Leckage 150, wobei die Leckage 172 in das Fluidbeaufschlagungsvorrichtungsgehäuse 114 integriert ist, beispielsweise durch einen fluidischen Kurzschluss in dem Fluidbeaufschlagungsvorrichtungsgehäuse 114. Das in Figur 7 dargestellte Getriebe 112 kann insbesondere ein Fluidbeaufschlagungsvorrichtungsgehäuse 114 umfassen, in welchem ein Elektromotor 118 und eine Pumpe 116 und ein Sensor 120, insbesondere ein Drucksensor 122, und eine interne Leckage 150 integriert sind.

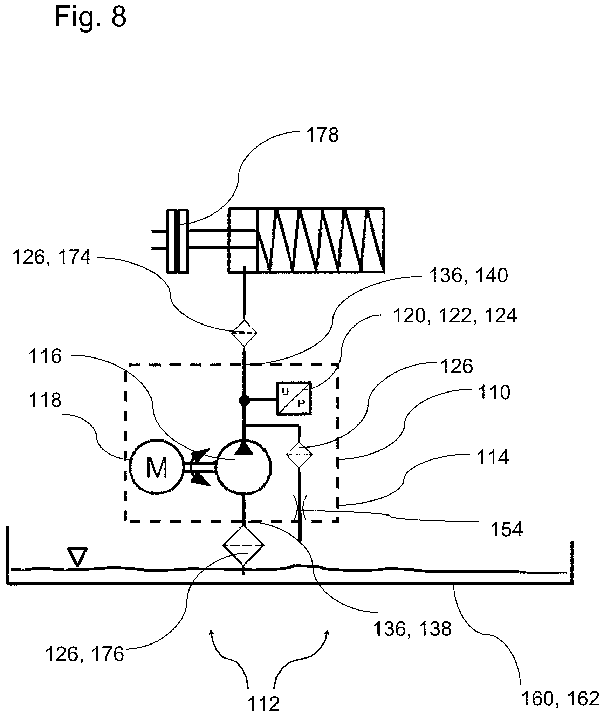

In Figur 8 ist ein Ausführungsbeispiel der erfindungsgemäßen Fluidbeaufschlagungsvorrichtung 110 und/oder des erfindungsgemäßen Getriebes 112 mit einer externen Leckage 152 dargestellt. Die externe Leckage 152 kann insbesondere aus dem Fluidbeaufschlagungsvorrichtungsgehäuse 114 heraus führen. Beispielsweise kann ein Volumenstrom an Fluid extern in den Ölsumpf zurückgeführt werden und/oder genutzt werden. Das in Figur 6 dargestellte Getriebe 112 kann insbesondere ein Fluidbeaufschlagungsvorrichtungsgehäuse 114 umfassen, in welchem ein Elektromotor 118 und eine Pumpe 116 und ein Sensor 120, insbesondere ein Drucksensor 122, und eine externe Leckage 152, insbesondere eine externe Leckage 152 mit einem Filter 126 und einer Blende 154, integriert sind.

Die in den Figuren 5 bis 8 dargestellten Getriebe 112 können insbesondere mindestens zwei Filter 126, bevorzugt einen Hochdruckfilter 174 und einen Saugfilter 176, aufweisen, welche bevorzugt innerhalb des Getriebegehäuses 160 und außerhalb des Fluidbeaufschlagungsvorrichtungsgehäuses 114 angeordnet sein können.

Figur 9 zeigt exemplarisch eine Teildarstellung eines erfindungsgemäße Getriebes 112, wobei das Getriebe 112 mindestens eine Einrichtung 166 zur Kühlung aufweisen kann, bevorzugt eine radiale Einrichtung 166 zur Kühlung des Elektromotors 118, und mindestens einen axialen Sauganschluss 138 und mindestens einen axialen Druckanschluss 140. Das in Figur 9 dargestellte Getriebe 112 kann insbesondere eine Fluidbeaufschlagungsvorrichtung 110 mit einem Elektromotor 118 und einer Pumpe 116 und einer Blende 154 und einem Drucksensor 122 und einem Temperatursensor 124, vorzugsweise in dem Fluidbeaufschlagungsvorrichtungsgehäuse 114 integriert, umfassen.

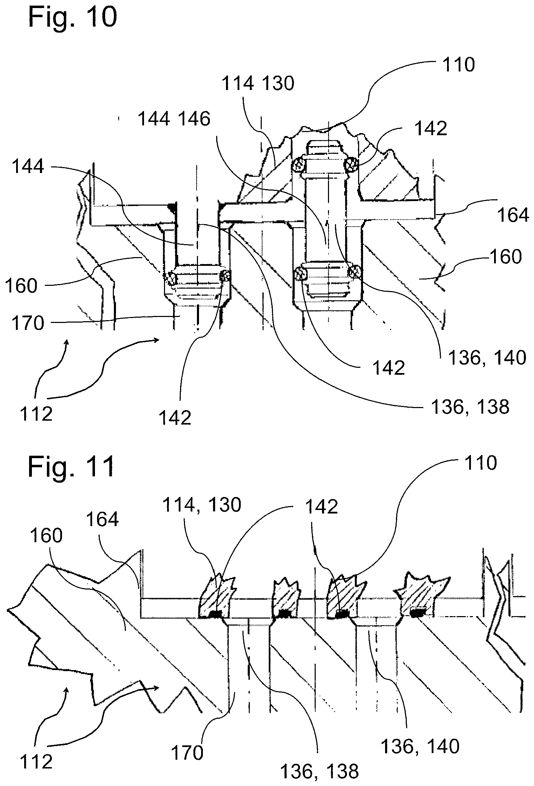

In den Figuren 10, 11 und 12 sind exemplarisch Fluidschnittstellen 136 einer erfindungsgemäßen Fluidbeaufschlagungsvorrichtung 110 und/oder eines erfindungsgemäßen Getriebes 112 dargestellt. Die Fluidschnittstelle 136 kann insbesondere eingerichtet sein um eine fluidische Verbindung 158 zwischen dem Fluidbeaufschlagungsvorrichtungsgehäuse 114 und dem Getriebegehäuse 160 abzudichten, insbesondere fluidisch abzudichten. Die Fluidschnittstellen 136 in Figur 10, 11 und 12 können bevorzugt einen Sauganschluss 138 und einen Druckanschluss 140 aufweisen.

Figur 10 zeigt eine Fluidschnittstelle 136, welche an dem Sauganschluss 138 und/oder an dem Druckanschluss 140 mindestens einen oder mindestens zwei O-Ringe 142 zur Abdichtung der Fluidschnittstelle 136 umfassen kann. Figur 10 zeigt insbesondere eine radiale Abdichtung. Figur 10 zeigt insbesondere eine Fluidschnittstelle 136, welche einen Stutzen 144 und ein Verbindungsröhrchen 146 aufweisen kann. Das Verbindungsröhrchen 146 kann beispielsweise ein Adapter-Röhrchen sein. Der O-Ring 142 kann bevorzugt zumindest teilweise in einer Nut des Röhrchens und/oder des Stutzens 144 angeordnet sein. Der O-Ring 142 kann bevorzugt um den Stutzen 144 und/oder um das Röhrchen angeordnet sein. Die O-Ringe 142 können bevorzugt im Wesentlichen senkrecht zu einer Rotationsachse 148 der Pumpe 116 angeordnet sein. Der Sauganschluss 138 und/oder der Druckanschluss 140 können im Wesentlichen parallel zu einer Rotationsachse 148 der Pumpe 116 ausgerichtet sein.

Figur 11 zeigt eine Fluidschnittstelle 136, welche an dem Sauganschluss 138 und/oder an dem Druckanschluss 140 mindestens einen O-Ring 142 zur Abdichtung der Fluidschnittstelle 136 umfassen kann. Der O-Ring 142 kann bevorzugt zumindest teilweise in einer Nut des Fluidbeaufschlagungsvorrichtungsgehäuses 114 angeordnet sein. Der O-Ring 142 kann bevorzugt um den Druckanschluss 140 und/oder um den Sauganschluss 138 angeordnet sein. Figur 11 zeigt insbesondere eine Fluidschnittstelle 136, welche keinen Stutzen 144 und kein Verbindungsröhrchen 146 aufweisen kann. Die O-Ringe 142 können bevorzugt im Wesentlichen senkrecht zu einer Rotationsachse 148 der Pumpe 116 angeordnet sein. Figur 11 zeigt insbesondere eine Fluidschnittstelle 136, welche mindestens eine Leitung in dem Getriebegehäuse 160 umfasst. Die Leitung in dem Getriebegehäuse 160 kann beispielsweise an dem Fluidbeaufschlagungsvorrichtungsgehäuse 114 zumindest teilweise konisch geformt sein, wobei die Leitung in dem Getriebegehäuse 160 an dem Fluidbeaufschlagungsvorrichtungsgehäuse 114 einen größeren Durchmesser aufweisen kann als an einer von dem Fluidbeaufschlagungsvorrichtungsgehäuse 114 entfernten Stelle. Der Sauganschluss 138 und/oder der Druckanschluss 140 können im Wesentlichen parallel zu einer Rotationsachse 148 der Pumpe 116 ausgerichtet sein. Figur 11 zeigt insbesondere eine Vorderseitenabdichtung, beispielsweise eine Gehäusetopfabdichtung, gegen das Getriebegehäuse 160.

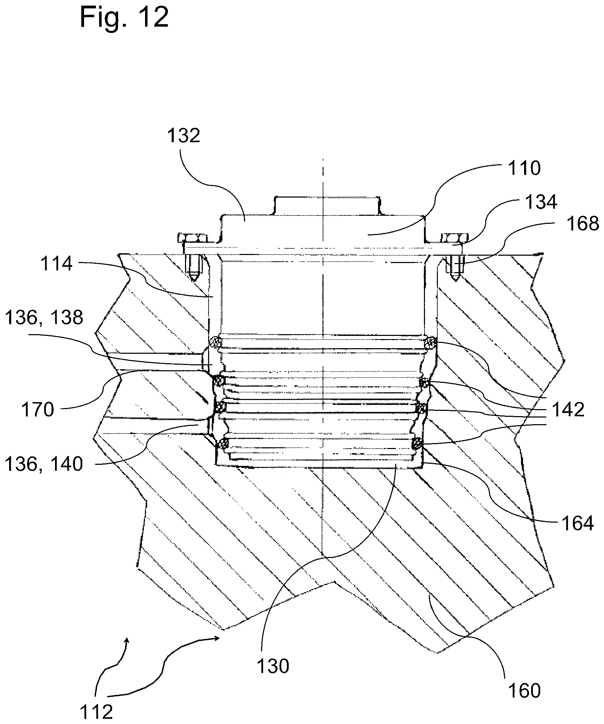

Figur 12 zeigt eine Fluidschnittstelle 136, welche an dem Sauganschluss 138 und/oder an dem Druckanschluss 140 mindestens zwei O-Ringe 142 zur Abdichtung der Fluidschnittstelle 136 umfassen kann. Das Fluidbeaufschlagungsvorrichtungsgehäuse 114 kann mindestens zwei Nuten, bevorzugt vier Nuten, aufweisen. Die O-Ringe 142 können bevorzugt zumindest teilweise in den Nuten des Fluidbeaufschlagungsvorrichtungsgehäuses 114 angeordnet sein. Die O-Ringe 142 können bevorzugt um das Fluidbeaufschlagungsvorrichtungsgehäuse 114 angeordnet sein. Die O-Ringe 142 können bevorzugt im Wesentlichen senkrecht zu einer Rotationsachse 148 der Pumpe 116 angeordnet sein. Figur 12 zeigt insbesondere eine Fluidschnittstelle 136, welche keinen Stutzen 144 und kein Verbindungsröhrchen 146 aufweisen kann. Figur 11 zeigt insbesondere eine Fluidschnittstelle 136, welche mindestens eine Leitung in dem Getriebegehäuse 160 umfassen kann. Die Leitung in dem Getriebegehäuse 160 kann beispielsweise an dem Fluidbeaufschlagungsvorrichtungsgehäuse 114 zumindest teilweise konisch geformt sein, wobei die Leitung in dem Getriebegehäuse 160 an dem Fluidbeaufschlagungsvorrichtungsgehäuse 114 einen größeren Durchmesser aufweisen kann als an einer von dem Fluidbeaufschlagungsvorrichtungsgehäuse 114 entfernten Stelle. Der Sauganschluss 138 und/oder der Druckanschluss 140 können im Wesentlichen senkrecht zu einer Rotationsachse 148 der Pumpe 116 ausgerichtet sein. Figur 12 zeigt insbesondere eine radiale Abdichtung mit radialem Sauganschluss 138 und radialem Druckanschluss 140.

Bevorzugt kann mindestens ein Filter 126, bevorzugt ein Saugfilter 176, zwischen dem Fluidsumpf 162 und der Fluidbeaufschlagungsvorrichtung 110 angeordnet sein, wie beispielsweise in den Figuren 5 bis 8 dargestellt. Zwischen der Fluidbeaufschlagungsvorrichtung 110 und der Kupplung 178 kann beispielsweise mindestens ein Filter 126, insbesondere ein Hochdruckfilter 174, angeordnet sein, wie beispielsweise in den Figuren 6 bis 8 dargestellt. Zwischen der Pumpe 116 und der Kupplung 178 und/oder dem Filter126, insbesondere dem Hochdruckfilter 174, kann beispielsweise der Sensor 120, insbesondere der Drucksensor 122 und/oder der Temperatursensor 124, angeordnet sein, wobei der Sensor 120, insbesondere der Drucksensor 122 und/oder der Temperatursensor 124, innerhalb oder außerhalb des Fluidbeaufschlagungsvorrichtungsgehäuses 114 angeordnet sein können.

In einem weiteren Aspekt der vorliegenden Erfindung wird ein Verfahren zur Montage einer Fluidbeaufschlagungsvorrichtung 110 eines Getriebes 112, wie oben beschrieben, vorgeschlagen. Die Fluidbeaufschlagungsvorrichtung 110 wird in ein Getriebegehäuse 160 eingesetzt und mindestens eine Fluidschnittstelle 136 der Fluidbeaufschlagungsvorrichtung 110 wird mit dem Getriebegehäuse 160 fluidisch verbunden.

**Bezugszeichenliste**

| | | | |
|---|---|---|---|
| 110 | Fluidbeaufschlagungsvorrichtung | 142 | O-Ring |
| 112 | Getriebe | 144 | Stutzen |
| 113 | Innenrotor | 146 | Verbindungsröhrchen |
| 114 | Fluidbeaufschlagungsvorrichtungsgehäuse | 148 | Rotationsachse der Pumpe |
| | | 150 | interne Leckage |
| 115 | Außenrotor | 152 | externe Leckage |
| 116 | Pumpe | 154 | Blende |
| 117 | Stator | 156 | Zwischenboden |
| 118 | Elektromotor | 158 | Verbindung |
| 119 | Rotor | 160 | Getriebegehäuse |
| 120 | Sensor | 162 | Fluidsumpf |
| 121 | E-Motorwelle | 164 | Aussparung |
| 122 | Drucksensor | 166 | Einrichtung |
| 123 | Saugniere | 168 | Befestigungseinrichtung |
| 124 | Temperatursensor | 170 | Bohrung |
| 125 | Inkrementalsensor | 172 | Leckage |
| 126 | Filter | 174 | Hochdruckfilter |
| 127 | Druckniere | 176 | Saugfilter |
| 128 | Elektroeinheit | 178 | Kupplung |
| 129 | Kabeldurchführung | 180 | Gehäuseteil |
| 130 | Gehäusetopf | 182 | Elektromotorgehäuseteil |
| 132 | Gehäusedeckel | 184 | Pumpengehäuseteil |
| 134 | Verschlussvorrichtung | 186 | Leitungsgehäuseteil |
| 136 | Fluidschnittstelle | 188 | Ventilgehäuseteil |
| 137 | Fluidleitung | 190 | Ventil |
| 138 | Sauganschluss | 192 | Stecker |
| 140 | Druckanschluss | | |

## Patentansprüche

1. Fluidbeaufschlagungsvorrichtung (110) für ein Getriebe (112) für ein Kraftfahrzeug, wobei die Fluidbeaufschlagungsvorrichtung (110) mindestens ein Fluidbeaufschlagungsvorrichtungsgehäuse (114) aufweist, wobei in dem Fluidbeaufschlagungsvorrichtungsgehäuse (114) mindestens eine Pumpe (116) und mindestens ein Elektromotor (118) integriert sind, wobei die Fluidbeaufschlagungsvorrichtung (110) modulartig ausgestaltet ist, wobei die Fluidbeaufschlagungsvorrichtung (110) mindestens eine Fluidschnittstelle (136) umfasst, wobei die Fluidschnittstelle (136) mindestens einen Sauganschluss (138) und mindestens einen Druckanschluss (140) aufweist, wobei die Fluidschnittstelle (136) mindestens einen O-Ring (142) zur Abdichtung der Fluidschnittstelle (136) umfasst.

2. Fluidbeaufschlagungsvorrichtung (110) nach dem vorhergehenden Anspruch, wobei in dem Fluidbeaufschlagungsvorrichtungsgehäuse (114) mindestens zwei Pumpen (116) integriert sind.

3. Fluidbeaufschlagungsvorrichtung (110) nach einem der vorhergehenden Ansprüche, wobei in dem Fluidbeaufschlagungsvorrichtungsgehäuse (114) mindestens ein Sensor (120), insbesondere mindestens ein Drucksensor (122) und/oder mindestens ein Temperatursensor (124), integriert sind.

4. Fluidbeaufschlagungsvorrichtung (110) nach einem der vorhergehenden Ansprüche, wobei in dem Fluidbeaufschlagungsvorrichtungsgehäuse (114) mindestens eine Elektroeinheit (128) integriert ist.

5. Fluidbeaufschlagungsvorrichtung (110) nach einem der vorhergehenden Ansprüche, wobei das Fluidbeaufschlagungsvorrichtungsgehäuse (114) mindestens einen Gehäusetopf (130) und mindestens einen Gehäusedeckel (132) aufweist, wobei der Gehäusedeckel (132) mit dem Gehäusetopf (130) verbunden ist.

6. Fluidbeaufschlagungsvorrichtung (110) nach einem der vorhergehenden Ansprüche, wobei das Fluidbeaufschlagungsvorrichtungsgehäuse (114) mindestens zwei miteinander verbundene Gehäuseteile (180) aufweist.

7. Fluidbeaufschlagungsvorrichtung (110) nach dem vorhergehenden Anspruch, wobei die Fluidschnittstelle (136) mindestens einen, bevorzugt zwei, Stutzen (144) aufweist.

8. Fluidbeaufschlagungsvorrichtung (110) nach einem der zwei vorhergehenden Ansprüche, wobei der Sauganschluss (138) und/oder der Druckanschluss (140) im Wesentlichen parallel zu einer Rotationsachse (148) der Pumpe (116) ausgerichtet sind.

9. Fluidbeaufschlagungsvorrichtung (110) nach einem der vorhergehenden Ansprüche wobei die Fluidbeaufschlagungsvorrichtung (110) mindestens eine interne Leckage (150) und/oder mindestens eine externe Leckage (152) umfasst, wobei die interne Leckage (150) einen geschlossenen Fluidkreislauf innerhalb des Fluidbeaufschlagungsvorrichtungsgehäuses (114) und/oder innerhalb der Pumpe (116) aufweist.

10. Fluidbeaufschlagungsvorrichtung (110) nach dem vorhergehenden Anspruch, wobei die interne Leckage (150) und/oder die externe Leckage (152) mindestens eine Blende (154) und/oder mindestens ein Ventil (190) und/oder mindestens einen Filter (126) und/oder mindestens einen Sensor (120), insbesondere mindestens einen Drucksensor (122) und/oder mindestens einen Temperatursensor (124), umfassen.

11. Getriebe (112) für ein Kraftfahrzeug, wobei das Getriebe (112) mindestens eine Fluidbeaufschlagungsvorrichtung (110) nach einem der vorhergehenden Ansprüche umfasst, wobei das Getriebe (112) mindestens einen Fluidsumpf (162) umfasst, wobei das Getriebe (112) mindestens eine Kupplung (178) umfasst, wobei die Fluidbeaufschlagungsvorrichtung (110) eingerichtet ist um die Kupplung (178) geregelt mit Fluid aus dem Fluidsumpf (162) zu beaufschlagen.

12. Getriebe (112) nach dem vorhergehenden Anspruch, wobei das Getriebe (112) mindestens ein Getriebegehäuse (160) umfasst, wobei das Getriebegehäuse (160) separat von dem Fluidbeaufschlagungsvorrichtungsgehäuse (114) ausgestaltet ist.

13. Getriebe (112) nach dem vorhergehenden Anspruch, wobei das Getriebegehäuse (160) mindestens eine Aussparung (164) umfasst, wobei die Fluidbeaufschlagungsvorrichtung (110) zumindest teilweise in der Aussparung (164) aufgenommen ist.

14. Getriebe (112) nach einem der beiden vorhergehenden Ansprüche, wobei zwischen dem Getriebegehäuse (160) und dem Fluidbeaufschlagungsvorrichtungsgehäuse (114) mindestens ein O-Ring (142), bevorzugt zwei O-Ringe (142), angeordnet sind.

15. Verfahren zur Montage einer Fluidbeaufschlagungsvorrichtung (110) eines Getriebes (112) nach den fünf vorhergehenden Ansprüchen, wobei die Fluidbeaufschlagungsvorrichtung (110) in ein Getriebegehäuse (160) eingesetzt wird und mindestens eine Fluidschnittstelle (136) der Fluidbeaufschlagungsvorrichtung (110) mit dem Getriebegehäuse (160) fluidisch verbunden wird.

## Claims

1. Fluid supply device (110) for a transmission (112) for a motor vehicle, the fluid supply device (110) having at least one fluid supply device housing (114), at least one pump (116) and at least one electric motor (118) being integrated into the fluid supply device housing (114), the fluid supply device (110) being of modular configuration, the fluid supply device (110) comprising at least one fluid interface (136), the fluid interface (136) having at least one suction connector (138) and at least one pressure connector (140), the fluid interface (136) comprising at least one O-ring (142) for sealing the fluid interface (136).

2. Fluid supply device (110) according to the preceding claim, at least two pumps (116) being integrated into the fluid supply device housing (114).

3. Fluid supply device (110) according to either of the preceding claims, at least one sensor (120), in particular at least one pressure sensor (122) and/or at least one temperature sensor (124), being integrated into the fluid supply device housing (114).

4. Fluid supply device (110) according to one of the preceding claims, at least one electrical unit (128) being integrated into the fluid supply device housing (114).

5. Fluid supply device (110) according to one of the preceding claims, the fluid supply device housing (114) having at least one housing pan (130) and at least one housing lid (132), the housing lid (132) being connected to the housing pan (130).

6. Fluid supply device (110) according to one of the preceding claims, the fluid supply device housing (114) having at least two housing parts (180) which are connected to one another.

7. Fluid supply device (110) according to the preceding claim, the fluid interface (136) having at least one, preferably two, connecting pieces (144).

8. Fluid supply device (110) according to either of the two preceding claims, the suction connector (138) and/or the pressure connector (140) being oriented substantially parallel to a rotational axis (148) of the pump (116).

9. Fluid supply device (110) according to one of the preceding claims, the fluid supply device (110) comprising at least one internal leakage means (150) and/or at least one external leakage means (152), the internal leakage means (150) having a closed fluid circuit within the fluid supply device housing (114) and/or within the pump (116).

10. Fluid supply device (110) according to the preceding claim, the internal leakage means (150) and/or the external leakage means (152) comprising at least one orifice (154) and/or at least one valve (190) and/or at least one filter (126) and/or at least one sensor (120), in particular at least one pressure sensor (122) and/or at least one temperature sensor (124).

11. Transmission (112) for a motor vehicle, the transmission (112) comprising at least one fluid supply device (110) according to one of the preceding claims, the transmission (112) comprising at least one fluid sump (162), the transmission (112) comprising at least one clutch (178), the fluid supply device (110) being set up to load the clutch (178) in a regulated manner with fluid from the fluid sump (162).

12. Transmission (112) according to the preceding claim, the transmission (112) comprising at least one transmission housing (160), the transmission housing (160) being configured separately from the fluid supply device housing (114).

13. Transmission (112) according to the preceding claim, the transmission housing (160) comprising at least one cut-out (164), the fluid supply device (110) being received at least partially in the cut-out (164).

14. Transmission (112) according to either of the two preceding claims, at least one O-ring (142), preferably two O-rings (142), being arranged between the transmission housing (160) and the fluid supply device housing (114).

15. Method for assembling a fluid supply device (110) of a transmission (112) according to the five preceding claims, the fluid supply device (110) being inserted into a transmission housing (160), and at least one fluid interface (136) of the fluid supply device (110) being connected fluidically to the transmission housing (160).

## Revendications

1. Dispositif d'alimentation en fluide (110) pour une boîte de vitesses (112) d'un véhicule automobile, le dispositif d'alimentation en fluide (110) présentant au moins un boîtier de dispositif d'alimentation en fluide (114), au moins une pompe (116) et au moins un moteur électrique (118) étant intégrés dans le boîtier de dispositif d'alimentation en fluide (114), le dispositif d'alimentation en fluide (110) étant configuré sous forme modulaire, le dispositif d'alimentation en fluide (110) comprenant au moins une interface de fluide (136), l'interface de fluide (136) présentant au moins un raccord d'aspiration (138) et au moins un raccord de pression (140), l'interface de fluide (136) comprenant au moins un joint torique (142) pour l'étanchéité de l'interface de fluide (136).

2. Dispositif d'alimentation en fluide (110) selon la revendication précédente, dans lequel au moins deux pompes (116) sont intégrées dans le boîtier de dispositif d'alimentation en fluide (114).

3. Dispositif d'alimentation en fluide (110) selon l'une quelconque des revendications précédentes, dans lequel au moins un capteur (120), en particulier au moins un capteur de pression (122) et/ou au moins un capteur de température (124) sont intégrés dans le boîtier de dispositif d'alimentation en fluide (114).

4. Dispositif d'alimentation en fluide (110) selon l'une quelconque des revendications précédentes, dans lequel au moins une unité électrique (128) est intégrée dans le boîtier de dispositif d'alimentation en fluide (114).

5. Dispositif d'alimentation en fluide (110) selon l'une quelconque des revendications précédentes, dans lequel le boîtier de dispositif d'alimentation en fluide (114) présente au moins un pot de boîtier (130) et au moins un couvercle de boîtier (132), le couvercle de boîtier (132) étant connecté au pot de boîtier (130).

6. Dispositif d'alimentation en fluide (110) selon l'une quelconque des revendications précédentes, dans lequel le boîtier de dispositif d'alimentation en fluide (114) présente au moins deux parties de boîtier (180) connectées l'une à l'autre.

7. Dispositif d'alimentation en fluide (110) selon la revendication précédente, dans lequel l'interface de fluide (136) présente au moins une tubulure, de préférence deux tubulures (144).

8. Dispositif d'alimentation en fluide (110) selon l'une quelconque des deux revendications précédentes, dans lequel le raccord d'aspiration (138) et/ou le raccord de pression (140) sont orientés essentiellement parallèlement à un axe de rotation (148) de la pompe (116).

9. Dispositif d'alimentation en fluide (110) selon l'une quelconque des revendications précédentes, dans lequel le dispositif d'alimentation en fluide (110) présente au moins une fuite interne (150) et/ou au moins une fuite externe (152), la fuite interne (150) présentant un circuit de fluide fermé à l'intérieur du boîtier de dispositif d'alimentation en fluide (114) et/ou à l'intérieur de la pompe (116).

10. Dispositif d'alimentation en fluide (110) selon la revendication précédente, dans lequel la fuite interne (150) et/ou la fuite externe (152) comprennent au moins un diaphragme (154) et/ou au moins une soupape (190) et/ou au moins un filtre (126) et/ou au moins un capteur (120), en particulier au moins un capteur de pression (122) et/ou au moins un capteur de température (124).

11. Boîte de vitesses (112) pour un véhicule automobile, la boîte de vitesses (112) comprenant au moins un dispositif d'alimentation en fluide (110) selon l'une quelconque des revendications précédentes, la boîte de vitesses (112) comprenant au moins un carter de fluide (162), la boîte de vitesses (112) comprenant au moins un embrayage (178), le dispositif d'alimentation en fluide (110) est prévu pour alimenter l'embrayage (178) de manière spécifique avec du fluide provenant du carter de fluide (162).

12. Boîte de vitesses (112) selon la revendication précédente, la boîte de vitesses (112) comprenant au moins un boîtier de boîte de vitesses (160), le boîtier de boîte de vitesses (160) étant configuré séparément du boîtier de dispositif d'alimentation en fluide (114).

13. Boîte de vitesses (112) selon la revendication précédente, dans laquelle le boîtier de boîte de vitesses (160) comprend au moins un évidement (164), le dispositif d'alimentation en fluide (110) étant reçu au moins en partie dans l'évidement (164).

14. Boîte de vitesses (112) selon l'une quelconque des deux revendications précédentes, dans laquelle au moins un joint torique (142), de préférence deux joints toriques (142), sont disposés entre le boîtier de boîte de vitesses (160) et le boîtier de dispositif d'alimentation en fluide (114).

15. Procédé de montage d'un dispositif d'alimentation en fluide (110) d'une boîte de vitesses (112) selon les cinq revendications précédentes, dans lequel le dispositif d'alimentation en fluide (110) est introduit dans un boîtier de boîte de vitesses (160) et au moins une interface de fluide (136) du dispositif d'alimentation en fluide (110) est connectée fluidiquement au boîtier de boîte de vitesses (160).
